(19) Europäisches Patentamt
European Patent Office
Office européen des brevets

(11) **EP 4 406 997 B1**

(12) **EUROPEAN PATENT SPECIFICATION**

(45) Date of publication and mention
of the grant of the patent:
**27.05.2026 Bulletin 2026/22**

(21) Application number: **22892384.3**

(22) Date of filing: **01.09.2022**

(51) International Patent Classification (IPC):
**C08J 9/228** (2006.01)    **B29C 44/00** (2006.01)
**B29C 44/44** (2006.01)    **B29K 23/00** (2006.01)

(52) Cooperative Patent Classification (CPC):
**C08J 9/228; B29C 44/3426; B29C 44/445;**
**C08J 9/18; C08J 9/232;** B29C 44/3461;
B29K 2023/12; B29K 2995/0063; B29K 2995/0082;
B29K 2995/0094

(86) International application number:
**PCT/JP2022/032907**

(87) International publication number:
**WO 2023/084881 (19.05.2023 Gazette 2023/20)**

(54) **METHOD FOR MANUFACTURING POLYPROPYLENE-BASED RESIN FOAMED PARTICLE MOLDED ARTICLE**

VERFAHREN ZUR HERSTELLUNG EINES FORMARTIKELS AUS HARZSCHAUMSTOFFTEILCHEN AUF POLYPROPYLENBASIS

PROCÉDÉ DE FABRICATION D'UN ARTICLE MOULÉ DE PARTICULES EXPANSÉES EN RÉSINE À BASE DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.11.2021 JP 2021184121**

(43) Date of publication of application:
**31.07.2024 Bulletin 2024/31**

(73) Proprietor: **JSP Corporation**
**Tokyo 100-0005 (JP)**

(72) Inventor: **SASAKI, Kenta**
**Kanuma-shi, Tochigi 322-0014 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
WO-A1-2021/157369    JP-A- 2002 248 645
JP-A- 2004 068 016    JP-A- 2006 307 177
JP-A- 2006 307 177    JP-A- H07 138 399
JP-A- H07 138 400    JP-A- H08 108 441
JP-A- H11 207 759    JP-A- H11 343 361

**Description**

TECHNICAL FIELD

The present invention relates to a method for manufacturing a molded article of polypropylene-based resin expanded beads.

BACKGROUND ART

A molded article of polypropylene-based resin expanded beads is lightweight and excellent in cushioning property, rigidity and the like, and therefore is used for various applications such as packaging materials, containers, and cushioning materials. In recent years, the use of the molded article of polypropylene-based resin expanded beads has been increasingly expanded, and accordingly, it is required to mold polypropylene-based resin expanded beads into various shapes.

The molded article of polypropylene-based resin expanded beads is manufactured, for example, by a method called an in-mold molding method in which polypropylene-based resin expanded beads are filled in a mold, and then a heating medium such as steam is supplied into the mold to perform heating. In the in-mold molding method, when the heating medium is supplied into the mold, the expanded beads are secondarily expanded, and the surfaces thereof are melted. As a result, the expanded beads in the mold are mutually fusion-bonded, and a molded article having a shape corresponding to the shape of a cavity of the mold can be obtained. Since the molded article immediately after molding easily swells due to secondary expanding, the molded article is cooled with water, air, or the like in the mold and then released from the mold.

In the in-mold molding method, when the filling of the expanded beads into the mold is insufficient, the appearance of the resulting molded article is likely to deteriorate. Thus, as a method for filling the polypropylene-based resin expanded beads in the mold as densely as possible, there is a method called cracking filling (see, for example, Patent Literature 1). In the cracking filling, the cavity is filled with the expanded beads in a state that the mold is not completely clamped and a movable mold is slightly retracted from a fixed mold in a mold opening direction, then the mold is clamped to thereby compress mechanically the expanded beads in the cavity. The cracking filling is a method commonly employed in the in-mold molding method because any special equipment is not required.

However, in the cracking filling, since the expanded beads are compressed in one direction by clamping of the mold, a difference in compression amount of the expanded beads locally increases depending on the shape of a desired molded article, and there is a problem that a portion having a high density and a portion having a low density are likely to be formed in the obtained molded article. In particular, when a molded article having a thick portion and a thin portion thinner than the thick portion is manufactured, there is a problem that a difference in density is likely to occur between the thick portion and the thin portion. In addition, the cracking filling has a problem that a filling property of the expanded beads into the thin portion is low.

On the other hand, as a method for filling the polypropylene-based resin expanded beads in the mold, there is a method called compression filling in which the expanded beads are filled in the mold while being compressed by pressurized gas (see, for example, Patent Literature 2). In the compression filling, the expanded beads are filled in the mold in an isotropically compressed state. Further, in the compression filling, since the expanded beads are filled in a state where the mold is clamped so that the cavity of the mold has a shape corresponding to the shape of the molded article to be obtained, the mold is not clamped after the filling. Thus, by performing the compression filling, a local difference in the density of the molded article can be reduced. Furthermore, in the compression filling, even when a molded article having a thick portion and a thin portion or a molded article having a complicated shape is to be obtained, the expanded beads can be relatively uniformly filled over the entire mold. Since the compression filling is excellent in the filling property of the expanded beads into the thin portion, a molded article having the thick portion and the thin portion can be easily manufactured by performing the compression filling. JP 2006-307177 A discloses a method for manufacturing a molded article of polypropylene-based resin expanded beads comprising filling a mold with polypropylene-based resin expanded beads in a state of being compressed by pressurized gas, and then supplying a heating medium into the mold to perform in-mold molding on the polypropylene-based resin expanded beads in the mold, the polypropylene-based resin expanded beads having a tubular shape with a through-hole, wherein a compression ratio P of the polypropylene-based resin expanded beads in a state of being filled in the mold, is 25% or less.

PRIOR ART /PATENT LITERATURE

Patent Literature 1: JP-B-46-38359

Patent Literature 2: JP-A-62-151325

SUMMERY OF INVENTION

PROBLEMS TO BE SOLVED BY INVENTION

When the expanded beads are filled in the mold by compression filling, it is desirable to increase a compression ratio of the expanded beads from the viewpoint of increasing the filling property of the expanded beads in the mold. However, when the compression ratio of the expanded beads is increased in the in-mold molding method of Patent Literature 2, there is a problem that it takes a significantly long time to cool the molded article in the mold. Further, when the compression ratio of the expanded beads is increased in the in-mold molding method of Patent Literature 2, there is a problem that the fusion bondability between the expanded beads is easily deteriorated. Furthermore, when the compression ratio of the expanded beads is increased, there is a problem that the density of the resulting molded article tends to be increased.

The present invention has been made in view of such circumstances, and is directed to provide a method for manufacturing a molded article of polypropylene-based resin expanded beads, which is excellent in a filling property of expanded beads into a mold, has a short cooling time after in-mold molding even when a compression ratio is increased, and can easily obtain a lightweight and favorable molded article of expanded beads.

MEANS FOR SOLVING PROBLEM

This object is achieved by a method for manufacturing a molded article of polypropylene-based resin expanded beads according to claim 1. Further improvements are given in the dependent claims.

EFFECTS OF INVENTION

Accordingly, is it possible to provide a method for manufacturing a molded article of polypropylene-based resin expanded beads, which is excellent in a filling property of expanded beads into a mold, has a short cooling time after in-mold molding even when a compression ratio is increased, and can easily obtain a lightweight and favorable molded article of expanded beads.

BRIEF DESCRIPTION OF DRAWINGS

Fig. 1 is a schematic view of an appearance of an expanded bead.
Fig. 2 is a cross-sectional view taken along line II-II in Fig. 1.
Fig. 3 is an explanatory view schematically showing a molding apparatus used for preparing a molded article.

MODE FOR CARRYING OUT INVENTION

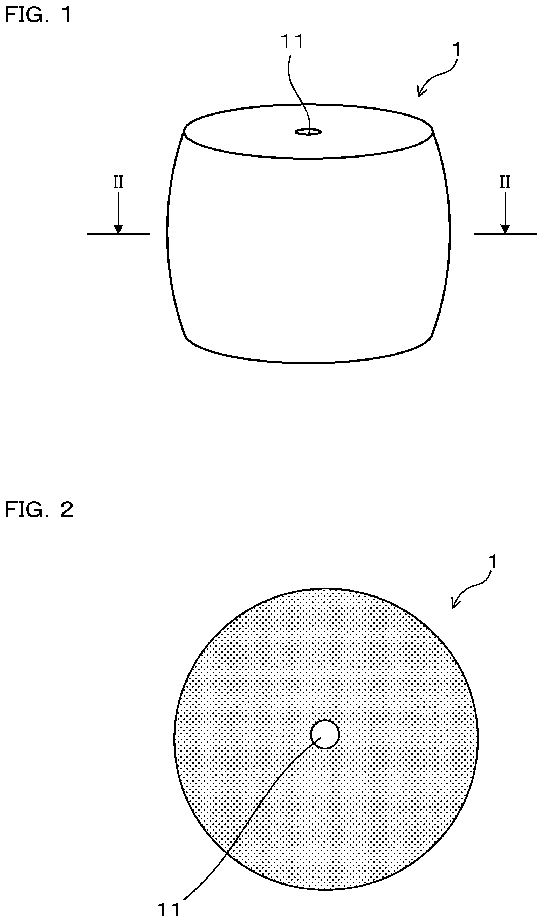

As shown in Figs. 1 and 2, an expanded bead 1 used in the manufacturing method has a tubular shape with a through-hole 11. An average hole diameter d of the through-holes 11 is 0.1 mm or more and less than 1 mm, and a ratio d/D of the average hole diameter d of the through-holes 11 to an average outer diameter D of the expanded beads 1 is 0.4 or less. A more detailed configuration of the expanded bead 1 will be described later.

In the manufacturing method, the expanded beads having the specific shape are filled in a mold while being compressed by pressurized gas. As the pressurized gas, for example, compressed air or the like can be used.

In the manufacturing method, an internal pressure applying step of applying internal pressure to the expanded beads before being filled in the mold may be performed, and the expanded beads may be filled in the mold in a state where the pressure in cells of the expanded beads is increased; however, as described later, the expanded beads have high secondary expandability, and thus a good molded article can be easily obtained even when the internal pressure is not applied in advance. From the viewpoint of further simplifying the manufacturing process of the molded article and enhancing productivity, the pressure in the cells of the expanded beads filled in the mold is preferably 0.1 MPa (G) or less, more preferably 0.05 MPa (G) or less, still more preferably 0.03 MPa (G) or less in terms of gauge pressure, and 0 MPa (G), that is, it is preferable to perform compression filling without increasing the pressure in the cells of the expanded beads. The pressure (internal pressure) in the cell can be measured by, for example, a method described in JP 2003-201361 A.

After the filling of the expanded beads into the mold is completed, the pressure in the mold is released. As a result, the expanded beads compressed by pressurized gas in the mold are restored to their original size, and the inside of the mold is filled with the expanded beads. Thereafter, a heating medium is supplied into the mold to heat the expanded beads. As the heating medium, for example, steam or the like can be used. The expanded beads in the mold are heated by the heating medium and fusion-bonded to each other while being secondarily expanded. Thereby, the expanded beads in the mold can be integrated to form a molded article.

After the heating of the expanded beads is completed, the molded article in the mold is cooled to stabilize the shape. Thereafter, the molded article is taken out from the mold, whereby the in-mold molding is completed. In the manufacturing method, after the completion of the in-mold molding, an aging step of allowing the molded article to stand in a high-temperature atmosphere to curtail shrinkage and deformation of the molded article may be performed; however, according to the manufacturing method, the shrinkage and deformation of the molded article can be curtailed even when the aging step is not performed as described later. The aging step specifically refers to a step of allowing the molded article taken out from the mold to stand in an atmosphere at about 60 to 80°C for 12 hours or longer to stabilize the shape of the molded article.

In the manufacturing method, a compression ratio P of the expanded beads in the mold in a state where the compression filling is completed is set to more than 25% and 80% or less. Here, the compression ratio P of the expanded beads is represented by the following formula (1) using the mass a (unit: kg) of the expanded beads filled in the mold, the bulk density b (unit: $kg/m^3$) of the expanded beads, and the internal volume c (unit: $m^3$) of the mold.

$$P = [\{a/(b \times c)\} - 1] \times 100 \quad ... (1)$$

By setting the compression ratio P of the expanded beads to more than 25%, the filling property of the expanded beads into the mold is enhanced, and the expanded beads can be uniformly filled in the entire mold even in the case of preparing a molded article having a shape in which the difference in thickness between the thick portion and the thin portion is large or a complicated shape. In this case, it is possible to reduce local variations in density of the obtained molded article. In addition, the formation of a gap between the expanded beads on a surface of the molded article can be curtailed, and a good molded article can be obtained.

From the viewpoint of more reliably obtaining these actions and effects, the compression ratio P of the expanded beads is higher than 25%, more preferably 30% or more, and still more preferably 40% or more. When the compression ratio P of the expanded beads is too low, it may be difficult to uniformly fill the expanded beads in the mold in the case of preparing a molded article having a shape in which the difference in thickness between the thick portion and the thin portion is large or a complicated shape. In this case, the gap between the expanded beads is likely to be formed on the surface of the molded article, which may cause deterioration in the appearance of the molded article.

By setting the compression ratio of the expanded beads to 80% or less, a lightweight molded article can be easily obtained utilizing the bulk density of the expanded beads. In addition, the heating medium is easily supplied throughout the inside of the mold during in-mold molding, and fusion bondability between the expanded beads is improved. Even when the expanded beads are heated at a low molding heating temperature (that is, a low molding pressure), a good molded article can be easily obtained. In addition, a cooling time of the molded article in the mold can be shortened.

From the viewpoint of more reliably obtaining these actions and effects, the compression ratio P of the expanded beads is preferably 72% or less, and more preferably 65% or less. When the compression ratio P of the expanded beads is too high, the density of the molded article tends to be higher than expected from the bulk density of the expanded beads, and this may make it difficult to obtain a lightweight molded article. Moreover, a restoring force of the expanded beads when released from a compressed state becomes excessively high, and there is a possibility that the cooling time of the molded article in the mold becomes long. In addition, when the aging step is omitted, the molded article may be significantly shrunk or deformed. From the viewpoint of enhancing the filling property of the expanded beads and more easily reducing the weight of the molded article, the compression ratio P of the expanded beads is more than 25% and 72% or less, and more preferably 30% or more and 65% or less.

(Polypropylene-based resin expanded bead)

The constitution of the polypropylene-based resin expanded beads used in the manufacturing method will be described in detail.

· Average outer diameter D of expanded bead and average hole diameter d of through-hole

As shown in Figs. 1 and 2, the expanded bead 1 has a tubular shape with the through-hole 11. The average hole diameter d of the through-holes 11 is 0.1 mm or more and less than 1 mm, and the ratio d/D of the average hole diameter d of the through-holes 11 to the average outer diameter D of the expanded beads 1 is 0.4 or less.

By performing the compression filling using the expanded beads having the specific shape, the filling property of the expanded beads into the mold can be enhanced, and the cooling time after the in-mold molding can be shortened even when the compression ratio P is relatively high. By using the expanded beads having the specific shape, it is possible to easily obtain a lightweight and favorable molded article in the wide range of the compression ratio P described above.

The shape of the entire expanded bead may be, for example, a columnar shape or a prismatic shape. The through-hole preferably penetrates the expanded bead in an axial direction. The number of through-holes may be one or more.

When the expanded bead has no through hole, it is difficult to mold the molded article at a low molding heating temperature depending on the compression ratio P, and there is a possibility that the fusion bondability is significantly deteriorated. Further, there is a possibility that the cooling time of the molded article in the mold becomes significantly long. Furthermore, when the aging step is omitted, there is a possibility that significant shrinkage and deformation of the molded article cannot be curtailed.

On the other hand, even when the expanded bead has the through-hole, if the average hole diameter d of the through-holes is too large, the gap between the expanded beads, irregularities derived from the through-hole, and the like may be easily formed on the surface of the molded article when the compression ratio P is in the specific range. When the compression ratio P of the expanded beads is further increased in order to avoid formation of the gap between the expanded beads, irregularities derived from the through-hole, and the like, the density of the molded article becomes remarkably high, and it may be difficult to obtain a lightweight molded article. Furthermore, when the compression ratio P is further increased, the molding heating temperature necessary for obtaining a good molded article is increased. When the aging step is omitted in this case, there is a possibility that significant shrinkage and deformation of the molded article cannot be curtailed. These problems can be easily avoided by setting the average hole diameter d of the through-holes to less than 1.0 mm. From the same viewpoint, the average hole diameter d of the through-holes is preferably 0.95 mm or less, more preferably 0.92 mm or less, and still more preferably 0.90 mm or less.

By setting the average hole diameter d of the through-holes to 0.1 mm or more, it is possible to curtail crushing and closing of the through-hole of the expanded bead during in-mold molding, and to more reliably exhibit the effect of the through-hole. From the same viewpoint, the average hole diameter d of the through-holes is preferably 0.2 mm or more, and more preferably 0.4 mm or more. From the viewpoint of more easily avoiding the formation of the gap between the expanded beads, irregularities derived from the through-hole, and the like described above and more reliably exhibiting the effect of the through-hole, the average hole diameter d of the through-holes is preferably 0.2 mm or more and 0.95 mm or less, and more preferably 0.4 mm or more and 0.92 mm or less.

The average hole diameter d of the through-holes can be adjusted within the specific range by adjusting an average hole diameter dr of through-holes of resin particles described later. **In** addition, the average hole diameter d of the through-holes can also be adjusted by adjusting the apparent density and the like of the expanded bead. The average hole diameter d can be more easily adjusted to a small value by forming the expanded beads into second-step expanded beads produced by second expanding.

The molded article obtained by the manufacturing method is less likely to shrink or deform even when the aging step is not performed. As a reason for obtaining this effect, for example, the following reasons can be considered. Since the expanded bead has the through-hole, it is considered that the heating medium can pass through the through-hole when the heating medium is supplied into the mold. As a result, it is considered that the heating medium easily reaches the inside of the mold, and the entire expanded beads in the mold can be easily heated. As described later, the expanded bead has sufficient secondary expandability. Thus, it is possible to obtain a molded article having excellent fusion bondability and a good appearance even under a condition where the molding heating temperature during in-mold molding is low.

**In** addition, as described above, according to the manufacturing method, since the molding heating temperature during in-mold molding can be lowered, heat received by the expanded beads from the heating medium such as steam during in-mold molding can be suppressed to be low. Further, an excessive increase in the internal temperature of the molded article after released is curtailed. As a result, the dimension of the molded article after the in-mold molding is easily stabilized early.

The molded article after the in-mold molding has fine voids derived from the through-holes of the expanded beads, and it is considered that the voids are continuous from the surface to the inside of the molded article. Thus, it is considered that when the molded article is taken out from the mold after the in-mold molding, the air quickly flows into the cells in the molded article through the voids, and as a result, the internal pressure of the molded article is stabilized early.

Therefore, it is considered that in the molded article obtained by the manufacturing method, the effect obtained by reducing the molding pressure and the effect of early stabilizing the internal pressure of the molded article act synergistically, whereby the shrinkage and deformation of the molded article can be curtailed without performing the aging step. When the aging step is omitted, for example, the shape of the molded article can be stabilized by allowing the released molded article to stand in an environment of 23°C for 12 hours or longer.

The average hole diameter d of the through-holes of the expanded beads is determined as follows. First, as shown in Fig. 2, the expanded bead is cut perpendicularly to a penetration direction of the through-hole at a position where an area of the cut surface is maximum. Next, a photograph of the cut surface is taken, and a cross-sectional area (specifically, opening area) of the through-hole is calculated. Then, a diameter of a virtual perfect circle having the same area as the cross-sectional area of the through-hole is calculated, and this value is taken as the hole diameter of the through-hole of each expanded bead. The above operation is performed on 50 or more expanded beads, and an arithmetic average value of the obtained hole diameters of the through-holes is taken as the average hole diameter d of the through-holes of the expanded beads. Even when the hole diameter of the through-hole of each expanded bead is not uniform in the penetration direction, the through-hole diameter of each expanded bead is determined by the hole diameter at the position where the area of the cut surface of the expanded bead is maximized as described above.

The average outer diameter D of the expanded beads is preferably 2 mm or more, more preferably 2.5 mm or more, and still more preferably 3 mm or more from the viewpoint that the secondary expandability of the expanded bead and the rigidity of the molded article are improved by increase in a wall thickness of the tubular expanded bead. On the other hand, from the viewpoint of improving the filling property of the expanded beads into the mold, the average outer diameter D of the expanded beads is preferably 5 mm or less, more preferably 4.5 mm or less, and still more preferably 4.3 mm or less. From the viewpoint of improving the secondary expandability and the filling property of the expanded beads and the rigidity of the molded article in a well-balanced manner, the average outer diameter D of the expanded bead is preferably 2 mm or more and 5 mm or less, more preferably 2.5 mm or more and 4.5 mm or less, and still more preferably 3 mm or more and 4.3 mm or less.

The ratio d/D of the average hole diameter d of the through-holes to the average outer diameter D of the expanded beads is 0.4 or less. When the ratio d/D exceeds 0.4, the secondary expandability of the expanded bead during in-mold molding may be deteriorated, the appearance of the molded article may be deteriorated, and the rigidity may be deteriorated. From the viewpoint of further improving the secondary expandability of the expanded bead, and further improving the appearance and rigidity of the molded article, d/D is preferably 0.35 or less, more preferably 0.3 or less, and still more preferably 0.25 or less. On the other hand, the ratio d/D is preferably 0.1 or more from the viewpoint of further curtailing crushing and closing of the through-hole of the expanded bead during in-mold molding and more reliably exhibiting the effect of the through-hole. From the viewpoint of further improving the secondary expandability of the expanded bead and more reliably exhibiting the effect of the through-hole, the ratio d/D is preferably 0.1 or more and 0.4 or less, more preferably 0.1 or more and 0.35 or less, still more preferably 0.1 or more and 0.3 or less, and particularly preferably 0.1 or more and 0.25 or less.

The average outer diameter D of the expanded beads is determined as follows. First, as shown in Fig. 2, the expanded bead is cut perpendicularly to a penetration direction of the through-hole at a position where an area of the cut surface is maximum. Next, a photograph of the cut surface of the expanded bead is taken, and the cross-sectional area of the expanded bead including the opening area of the through-hole is calculated. Then, the diameter of a virtual perfect circle having the same area as the cross-sectional area of the expanded bead is calculated, and this value is taken as the outer diameter of each expanded bead. The above operation is performed on 50 or more expanded beads, and an arithmetic average value of the obtained outer diameters of the expanded beads is taken as the average outer diameter D of the expanded beads. Even when the outer diameter of each expanded bead is not uniform in the penetration direction, the outer diameter of each expanded bead is determined by the outer diameter at the position where the area of the cut surface of the expanded bead in the direction perpendicular to the penetration direction is maximized as described above.

According to the manufacturing method, as described above, a good molded article can be easily obtained even when no internal pressure is applied to the expanded beads before being filled in the mold. In general, in the in-mold molding of the polypropylene-based resin expanded beads, in order to supplement the secondary expandability, the internal pressure applying step of impregnating cells of the expanded beads with an inorganic gas such as air to increase the internal pressure of the cells is performed, and the expanded beads to which an expanding ability has been applied are filled in the mold to perform the in-mold molding in many cases. On the other hand, in the compression filling, since the expanded beads are filled in the mold in the state of being compressed by the pressurized gas, the pressure in the cells of the expanded beads in a state where the filling is completed is higher than the atmospheric pressure, and the secondary expandability of the expanded beads can be supplemented by the restoring force at the time of pressure release. In addition, as described above, in the expanded bead, the average hole diameter d and the ratio d/D are within predetermined ranges, and the expanded bead has excellent secondary expandability. Therefore, according to the manufacturing method, the internal pressure applying step can be omitted, the manufacturing step of the molded article can be further simplified, and the productivity can be enhanced.

· Apparent density and bulk density of expanded bead

The bulk density of the expanded beads is preferably 10 kg/m$^3$ or more and 100 kg/m$^3$ or less, more preferably 10 kg/m$^3$ or more and 50 kg/m$^3$ or less, still more preferably 15 kg/m$^3$ or more and 50 kg/m$^3$ or less, and particularly preferably 20 kg/m$^3$ or more and 40 kg/m$^3$ or less. In this case, the lightweight and rigidity of the molded article can be improved in a well-balanced manner.

A ratio of the apparent density of the expanded bead to the bulk density of the expanded bead (that is, apparent density/bulk density) is preferably more than 1.6 and 2.0 or less, and more preferably 1.7 or more and 1.9 or less. In this case, the cooling time after the in-mold molding can be further shortened, and a lightweight and favorable molded article of expanded beads can be more easily obtained. It is possible to more reliably curtail the deformation and shrinkage of the molded article when the aging step is omitted.

A method for calculating the bulk density of the expanded beads is as follows. First, the expanded beads are left to stand for 24 hours or longer in an environment of a relative humidity of 50%, a temperature of 23°C, and an atmospheric pressure of 1 atm to thereby condition the expanded beads. The expanded beads thus obtained are filled in a measuring cylinder so as to be naturally deposited, and a bulk volume (unit: L) of the expanded beads is read from a scale of the measuring cylinder. Then, the mass (unit: g) of the expanded beads in the measuring cylinder is divided by the above-described bulk volume, and the unit of the resulting value is converted to thereby obtain the bulk density (unit: kg/m$^3$) of the expanded beads. It is noted that the bulk density of the expanded beads is a value obtained in an environment of an atmospheric pressure of 1 atm using the expanded beads in a natural state which are not compressed.

A method for calculating the apparent density of the expanded beads is as follows. First, the expanded beads are left to stand for 1 day in the environment of a relative humidity of 50%, a temperature of 23°C, and an atmospheric pressure of 1 atm to thereby condition the expanded beads. After measuring the mass (unit: g) of the expanded beads, the expanded beads are submerged in a measuring cylinder containing an alcohol (for example, ethanol) having a temperature of 23°C using a wire mesh or the like, and the volume (unit: L) of the expanded beads is determined based on increase in liquid level. Thereafter, the mass of the expanded beads is divided by the volume of the expanded beads, and the unit of the resulting value is converted to thereby obtain the apparent density (unit: kg/m$^3$) of the expanded beads.

· Circularity of through-hole

An average value of circularity of the through-holes of the expanded beads is preferably 0.90 or more, more preferably 0.92 or more, and still more preferably 0.95 or more. Since the through-hole having a high circularity is not easily crushed by compression from each direction, the through-hole is not easily closed even in a state where the pressure in the mold is released after the compression filling. Thus, the expanded beads in which the average value of the circularity of the through-holes is within the above-mentioned specific range can more reliably exhibit the effect of lowering the molding heating temperature and the effect of shortening the cooling time after the in-mold molding even when the compression ratio P is increased. The average value of the circularity of the through-holes can be adjusted within the above range by, for example, changing the shape of a die for forming the through-hole or adjusting the water temperature at the time of cooling an extruded product, which is usually performed at a water temperature of about 25°C, to a low temperature (for example, 15°C or lower) in a method for producing resin particles to be described later. The upper limit of the average value of the circularity of the through-holes is 1. As described above, the average hole diameter d of the through-holes of the expanded bead is 0.1 mm or more and less than 1 mm. In such expanded beads having a small average hole diameter d, the through-hole is likely to be crushed during production, and the circularity of the through-hole is likely to be small; however, according to the above method, expanded beads having a high circularity of the through-hole can be easily obtained.

The average value of the circularity of the through-holes is calculated by the following method. First, as shown in Fig. 2, the expanded bead is cut perpendicularly to a penetration direction of the through-hole at a position where an area of the cut surface is maximum. Next, a photograph of the cut surface of the expanded bead is taken, and a cross-sectional area S (that is, the opening area of the through-hole in the cut surface) and a peripheral length C (that is, the length of the contour of the through-hole in the cut surface) of the through-hole are obtained. The circularity of the through-hole of each expanded bead is a value calculated based on the following formula (2) using the cross-sectional area S and the peripheral length C of the through-hole described above, and a circular constant $\pi$.

$$\text{Circularity} = 4\pi S/(C \times C) \ldots (2)$$

By performing the above-described operation on 50 or more expanded beads and arithmetically averaging the obtained values, the average value of the circularity of the through-holes can be obtained. Even when the hole diameter of the through-hole of each expanded bead is not uniform in the penetration direction, the circularity of the through-hole of each expanded bead is determined by the cross-sectional area and the peripheral length of the through-hole at the position where the area of the cut surface of the expanded bead is maximized as described above.

· Average wall thickness

An average wall thickness t of the expanded bead is preferably 1.2 mm or more and 2 mm or less. **In** this case, since the rigidity of the expanded bead becomes higher, the shape of the through-hole is easily maintained even in the state where the pressure in the mold is released after compression filling, and the through-hole is more difficult to be closed. As a result, it is possible to more reliably obtain an effect such as shortening of the cooling time by the through-hole. In this case, the secondary expandability of the expanded bead can be further improved. From such a viewpoint, the average wall thickness t of the expanded bead is preferably 1.3 mm or more and 2 mm or less, and more preferably 1.4 mm or more and 2 mm or less.

The average wall thickness t of the expanded bead is a distance from the surface (that is, the outer surface) of the expanded bead to an outer edge (that is, the inner surface of the expanded bead) of the through-hole, and is a value obtained by the following formula (3).

$$t = (D-d)/2 \qquad \ldots (3)$$

In the formula (3), d represents the average hole diameter (unit: mm) of the through-holes, and D represents the average outer diameter (unit: mm) of the expanded beads.

· Foamed layer

The expanded bead has a foamed layer containing a polypropylene-based resin as a base resin and including a through-hole. In the present specification, the polypropylene-based resin refers to a homopolymer of a propylene monomer and a propylene-based copolymer containing 50% by mass or more of a propylene-derived structural unit. The polypropylene-based resin is preferably a propylene-based copolymer obtained by copolymerizing propylene with another monomer. Preferable examples of the propylene-based copolymer include copolymers of propylene and an α-olefin having 4 to 10 carbon atoms, such as an ethylene-propylene copolymer, a butene-propylene copolymer, a hexene-propylene copolymer, and an ethylene-propylene-butene copolymer. These copolymers are, for example, random copolymers, block copolymers, or the like, and are preferably random copolymers. The polypropylene-based resin may contain a plurality of types of polypropylene-based resins. The expanded bead which has a foamed layer including a polypropylene-based resin is generally called polypropylene-based resin expanded bead.

The foamed layer may contain a polymer other than the polypropylene-based resin as long as the above-described actions and effects are not impaired. Examples of the other polymer include thermoplastic resins other than polypropylene-based resins such as polyethylene-based resins and polystyrene-based resins, and thermoplastic elastomers. An amount of the other polymer in the foamed layer is preferably 20% by mass or less, more preferably 10% by mass or less, still more preferably 5% by mass or less, and particularly preferably 0% by mass, that is, it is particularly preferable that the foamed layer substantially contains only a polypropylene-based resin as a polymer.

The polypropylene-based resin constituting the foamed layer is preferably an ethylene-propylene random copolymer having an ethylene component content of 0.5% by mass or more and 3.5% by mass or less. In this case, since the rigidity of the foamed layer is increased, the through-hole is less likely to be closed even when the compression ratio P of the expanded beads is increased during compression filling. Thus, even when the compression ratio P of the expanded beads is increased, the effect such as shortening of the cooling time of the molded article can be more reliably obtained. In this case, since the rigidity of the molded article can be increased, the shrinkage and deformation of the molded article can be more effectively curtailed even when the molded article taken out from the mold is not subjected to the aging step. From such a viewpoint, the amount of the ethylene component in the ethylene-propylene random copolymer is more preferably 0.5% by mass or more and 3.5% by mass or less, still more preferably 0.5% by mass or more and 2.8% by mass or less, and particularly preferably 0.5% by mass or more and 2.0% by mass or less.

On the other hand, the amount of the ethylene component in the ethylene-propylene random copolymer is more preferably 1.0% by mass or more and 3.5% by mass or less, still more preferably 1.5% by mass or more and 3.5% by mass or less, and particularly preferably more than 2.0% by mass and 3.5% by mass or less from the viewpoint that a molded article having good fusion bondability and appearance can be formed at a lower molding heating temperature. The ethylene-propylene random copolymer refers to a random copolymer including an ethylene component and a propylene component, and the total of the ethylene component and the propylene component is 100% by mass.

The amount of the monomer component in the ethylene-propylene random copolymer can be calculated based on an infrared absorption spectrum of the copolymer. The ethylene component and the propylene component of the ethylene-propylene copolymer mean a constituent unit derived from ethylene and a constituent unit derived from propylene in the ethylene-propylene copolymer, respectively. The amount of each monomer component in the copolymer means the amount of a constituent unit derived from each monomer in the copolymer.

A melting point Tmc of the polypropylene-based resin constituting the foamed layer is preferably 158°C or lower, more preferably 155°C or lower, still more preferably 150°C or lower, and particularly preferably 148°C or lower. In this case, it is possible to form a good molded article having sufficient rigidity at a lower molding heating temperature (that is, low molding pressure). On the other hand, from the viewpoint of further enhancing the heat resistance, mechanical strength, and the like of the molded article, the melting point Tmc of the polypropylene-based resin constituting the foamed layer is preferably 135°C or higher, more preferably 138°C or higher, and still more preferably 140°C or higher. From the viewpoint of further lowering the molding heating temperature and further enhancing the heat resistance, mechanical strength, and the like of the molded article, the melting point Tmc of the polypropylene-based resin constituting the foamed layer is preferably 135°C or higher and 158°C or lower, more preferably 138°C or higher and 155°C or lower, and still more preferably 140°C or higher and 150°C or lower.

The melting point of the polypropylene-based resin is determined based on JIS K7121:1987. Specifically, first, a test piece composed of a polypropylene-based resin is prepared, and is conditioned based on "(2) The case of measurement of melting temperature after a definite heat treatment" described in JIS K 7121:1987. A DSC curve is obtained by raising the temperature of the conditioned test piece from 30°C to 200°C at a heating rate of 10°C/min, and a vertex temperature of a melting peak appearing in the DSC curve is defined as the melting point Tmc. When a plurality of the melting peaks appear in the DSC curve, the vertex temperature of the melting peak having the largest area is taken as the melting point Tmc.

The flexural modulus of the polypropylene-based resin constituting the foamed layer is preferably 800 MPa or more and 1600 MPa or less. In this case, since the rigidity of the foamed layer is increased, the through-hole is less likely to be closed even when the compression ratio P of the expanded beads is increased during compression filling. Thus, even when the compression ratio P of the expanded beads is increased, the effect such as shortening of the cooling time of the molded article can be more reliably obtained.

Further, in this case, since the rigidity of the molded article can be increased, the shrinkage and deformation of the molded article can be more effectively curtailed even when the molded article removed from the mold is not subjected to the aging step. From the viewpoint of further enhancing these effects, the flexural modulus of the polypropylene-based resin is more preferably 900 MPa or more and 1600 MPa or less, still more preferably 1000 MPa or more and 1600 MPa or less, and even more preferably 1200 MPa or more and 1600 MPa or less.

On the other hand, the flexural modulus of the polypropylene-based resin is more preferably 800 MPa or more and 1500 MPa or less, still more preferably 800 MPa or more and 1300 MPa or less, and particularly preferably 800 MPa or more and less than 1200 MPa from the viewpoint that a molded article excellent in fusion bondability and surface properties can be molded at a lower molding heating temperature. The flexural modulus of the polypropylene-based resin can be determined based on JIS K 7171:2008.

· Cover layer

The expanded bead may include the foamed layer and a cover layer covering the foamed layer. When the expanded bead includes the cover layer, the foamed layer covered with the cover layer is also called a "foamed core layer". The cover layer may cover the entire outer surface of the foamed core layer, or may cover a part of the outer surface. More specifically, the expanded bead may include, for example, a multilayer structure called a core-sheath structure including a tubular foamed core layer with a through-hole, and a cover layer covering a side peripheral surface of the foamed core layer. The cover layer may be in a foamed state, and is preferably in a substantially non-foamed state. "Substantially non-foamed" means having little cellular structure. The thickness of the cover layer is, for example, 0.5 to 50 $\mu$m.

As the base resin of the cover layer, for example, a polyolefin-based resin can be adopted. Examples of the polyolefin-based resin include polyethylene-based resins, polypropylene-based resins, and polybutene-based resins. From the viewpoint of adhesiveness to the foamed core layer, the polyolefin-based resin constituting the cover layer is preferably a polyethylene-based resin or a polypropylene-based resin, and more preferably the polypropylene-based resin. Examples of the polypropylene-based resin include an ethylene-propylene copolymer, an ethylene-butene copolymer, an ethylene-propylene-butene copolymer, and a propylene homopolymer, and among them, the ethylene-propylene copolymer or the ethylene-propylene-butene copolymer is preferable. Examples of the polyethylene-based resin include linear low density polyethylene, low density polyethylene, and high density polyethylene, and among them, linear low density polyethylene is preferable.

The cover layer may contain a polymer other than the polyolefin-based resin as long as the above-described actions and effects are not impaired. Examples of the other polymer include thermoplastic resins other than polyolefin-based resins such as polystyrene-based resins, and thermoplastic elastomers. An amount of the other polymer in the cover layer is preferably 20% by mass or less, more preferably 10% by mass or less, still more preferably 5% by mass or less, and particularly preferably 0% by mass, that is, it is particularly preferable that the cover layer substantially contains only a polyolefin-based resin as a polymer.

The cover layer is, for example, a layer capable of improving the fusion bondability of the expanded bead. The melting point Tms of the polyolefin-based resin constituting the cover layer is preferably lower than the melting point Tmc of the polypropylene-based resin constituting the foamed core layer. **In** this case, since the fusion bondability between the expanded beads during in-mold molding is further improved, a good molded article can be easily obtained even when the molding heating temperature during in-mold molding is further lowered (that is, the molding pressure is further lowered). By further lowering the molding pressure during in-mold molding, the shrinkage and deformation of the molded article can be more easily curtailed even when the aging step is not performed. From the viewpoint of further enhancing these effects, a difference Tmc - Tms between the melting point Tmc of the polypropylene-based resin and the melting point Tms of the polyolefin-based resin is preferably 5°C or more, more preferably 6°C or more, and still more preferably 8°C or more.

**In** addition, the difference Tmc - Tms between the melting point Tmc of the polypropylene-based resin and the melting point Tms of the polyolefin-based resin is preferably 35 °C or less, more preferably 25 °C or less, and still more preferably 20 °C or less from the viewpoint of curtailing peeling between the foamed core layer and the cover layer, adhesion between the expanded beads, and the like. The difference Tmc - Tms is preferably 5°C or more and 35°C or less, more preferably 6°C or more and 25°C or less, and still more preferably 8°C or more and 20°C or less from the viewpoint of further improving the fusion bondability between the expanded beads during in-mold molding and more effectively curtailing peeling between the foamed core layer and the cover layer, adhesion between the expanded beads, and the like.

From the viewpoint of further enhancing the fusion bondability of the expanded bead during molding, the melting point Tms of the polyolefin-based resin constituting the cover layer is preferably 120°C or higher and 145°C or lower, and more preferably 125°C or higher and 140°C or lower. A method for measuring the melting point of the polyolefin-based resin constituting the cover layer is the same as the method for measuring the melting point of the polypropylene-based resin constituting the foamed layer described above except that a test piece composed of a polyolefin-based resin is used instead of a test piece composed of a polypropylene-based resin. It is noted that when a plurality of melting peaks appear in the DSC curve, the vertex temperature of the melting peak on the lowest temperature side is set as the melting point Tms.

A mass ratio between the foamed core layer and the cover layer in the expanded bead is preferably foamed core layer : cover layer = 99.5 : 0.5 to 85: 15. In other words, a mass ratio of the cover layer to a total mass of the foamed core layer and the cover layer (that is, total mass of the expanded bead) is preferably 0.5% or more and 15% or less. In this case, the effect of the cover layer described above can be reliably obtained. From the viewpoint of more reliably exhibiting the effect of the cover layer, the mass ratio of the cover layer is more preferably 1% or more, and still more preferably 3% or more.

On the other hand, from the viewpoint of more reliably curtailing the shrinkage and deformation of the molded article even when a molded article having a particularly low apparent density is to be manufactured without the aging step, the mass ratio of the cover layer is more preferably 12% or less, and still more preferably 10% or less. The mass ratio of the cover layer is more preferably 1% or more and 12% or less, and still more preferably 3% or more and 10% or less from the viewpoint of more reliably obtaining the effect of the cover layer and more easily obtaining a molded article having smaller shrinkage and deformation even when the aging step is omitted. The mass ratio between the foamed core layer and the cover layer in the expanded bead corresponds to the mass ratio between a core layer and a cover layer in a multilayer resin particle described later.

Additives such as a cell adjusting agent, a crystal nucleating agent, a colorant, a flame retardant, a flame retardant aid, a plasticizer, an antistatic agent, an antioxidant, an ultraviolet inhibitor, a light stabilizer, a conductive filler, and an antibacterial agent can be added to the expanded bead as necessary. As the cell adjusting agent, inorganic powders such as talc, mica, zinc borate, calcium carbonate, silica, titanium oxide, gypsum, zeolite, borax, aluminum hydroxide, and carbon; and organic powders such as a phosphoric acid-based nucleating agent, a phenolic nucleating agent, an amine-based nucleating agent, and a polyfluoroethylene-based resin powder can be used. When the cell adjusting agent is added, an amount of the cell adjusting agent is preferably 0.01 parts by mass or more and 1 part by mass or less with respect to 100 parts by mass of the polypropylene-based resin.

As the colorant, carbon black is preferably used. An amount of carbon black is preferably 0.5 parts by mass or more and 5 parts by mass or less with respect to 100 parts by mass of the polypropylene-based resin.

(Method for producing polypropylene-based resin expanded bead)

Next, a method for producing expanded beads will be described. The expanded beads are produced by performing a dispersion step, a blowing agent impregnation step, and an expansion step. In the dispersion step, tubular resin particles with a through-hole are dispersed in a dispersion medium in a sealed container. In the blowing agent impregnation step, the resin particles dispersed in the dispersion medium are impregnated with a blowing agent. In the expansion step, the resin particles containing the blowing agent are expanded. The expansion step is performed by, for example, a method of releasing resin particles containing a blowing agent together with a dispersion medium under low pressure (that is, dispersion medium release expanding method). Hereinafter, the method for producing expanded beads will be described in more detail.

· Resin particle

The resin particle used for producing an expanded bead has a tubular core layer containing a polypropylene-based resin as a base resin and including a through-hole. The resin particle may further have a cover layer including a polyolefin-based resin and covering the core layer. The core layer of the resin particle corresponds to the foamed layer of the expanded bead. The cover layer of the resin particle corresponds to the cover layer of the expanded bead. Therefore, in the case of obtaining a single-layered expanded bead including only the foamed layer, it is sufficient to prepare a resin particle having only the core layer. In the case of obtaining a multilayer expanded bead including the foamed core layer and the cover layer, it is sufficient to prepare a resin particle including the core layer and the cover layer. Hereinafter, the resin particle including the core layer and the cover layer may be referred to as a "multilayer resin particle".

A single-layered resin particle is produced, for example, as follows. First, a polypropylene-based resin for forming a core layer and an additive or the like added as necessary are melt-kneaded using an extruder to prepare a resin melt for forming a core layer. The resin melt for forming a core layer is extruded from a small hole of a die of the extruder to prepare a tubular extruded product with a through-hole, and then the extruded product is cut to a desired length, whereby resin particles can be obtained. A method for cutting the extruded product is not particularly limited, and can be appropriately selected from a strand cutting method, a hot cutting method, an underwater cutting method, and the like.

**In** producing the resin particles, it is preferable to adopt a strand cutting method in which a tubular extruded product is cooled in water having a water temperature of 15°C or lower and then cut. **In** this case, the circularity of the through-hole of the resin particle can be further increased, and the average value of the circularity of the through-holes in the finally obtained expanded beads can be further increased.

When multilayer resin particles are to be produced, a coextrusion apparatus including an extruder for forming a core layer, an extruder for forming a cover layer, and a coextrusion die connected to these two extruders may be used. In the extruder for forming a core layer, a polypropylene-based resin for forming a core layer and an additive or the like added as necessary are melt-kneaded to prepare a melt-kneaded product for forming a core layer. In the extruder for forming a cover layer, a polyolefin-based resin for forming a cover layer and an additive or the like added as necessary are melt-kneaded to prepare a melt-kneaded product for forming a cover layer. These melt-kneaded products are co-extruded and joined in the die to form a multilayer structure composite including a tubular core layer in the non-foamed state and a cover layer in the non-foamed state covering an outer surface of the tubular core layer. Similarly to the single-layered resin particle, this composite is extruded from the small hole of the die of the extruder to prepare a tubular extruded product with a through-hole, and then the extruded product is cut to a desired length, whereby multilayer resin particles can be obtained.

The particle size of the resin particle is preferably 0.1 mm or more and 3.0 mm or less, and more preferably 0.3 mm or more and 1.5 mm or less. A ratio of the length to the outer diameter of the resin particle is preferably 0.5 or more and 5.0 or less, and more preferably 1.0 or more and 3.0 or less.

An average mass per one resin particle is preferably 0.1 mg or more and 20 mg or less, more preferably 0.2 mg or more and 10 mg or less, still more preferably 0.3 mg or more and 5 mg or less, and particularly preferably 0.4 mg or more and 2 mg or less. The average mass per one resin particle is a value obtained by dividing the mass of randomly selected 200 resin particles by the number of resin particles.

When the resin particle includes the core layer and the cover layer, the mass ratio of the core layer to the cover layer is preferably core layer : cover layer = 99.5 : 0.5 to 85 : 15, more preferably 99 : 1 to 92 : 8, and still more preferably 97 : 3 to 90 : 10.

By adjusting the average hole diameter dr of the through-holes of the core layers in the resin particles, the average hole diameter d of the through-holes of the foamed core layers in the expanded beads can be adjusted to the specific range. More specifically, by setting the average hole diameter dr of the through-holes of the resin particles to 0.10 mm or more and less than 0.25 mm, preferably 0.12 mm or more and less than 0.24 mm, and more preferably 0.15 mm or more and less than 0.22 mm, expanded beads having an average hole diameter d of the through-holes of 0.1 mm or more and less than 1 mm can be easily produced. The average hole diameter dr of the through-holes of the core layers of the resin particles can be adjusted by, for example, a hole diameter (that is, the inner diameter of the die) of a small hole of the die for forming the through-hole.

By adjusting the particle size and the average mass of the resin particles, the average outer diameter and the average wall thickness of the expanded beads can be adjusted within the above-described ranges. More specifically, by setting a ratio dr/Dr of the average hole diameter dr of the through-holes to the average outer diameter Dr of the resin particles to 0.4 or less, preferably 0.3 or less, more preferably 0.25 or less, and still more preferably 0.2 or less, expanded beads in which the ratio d/D of the average hole diameter d of the through-holes to the average outer diameter D of the expanded beads is 0.4 or less can be easily produced. From the viewpoint of production stability of the resin particles, the average hole diameter dr of the through-holes of the resin particles is preferably 0.1 mm or more, and the ratio dr/Dr of the average hole diameter dr of the through-holes to the average outer diameter Dr of the resin particles is preferably 0.1 or more. From the viewpoint of more stably producing expanded beads having the ratio d/D within the specific range, the ratio dr/Dr in the resin particles is preferably 0.1 or more and 0.4 or less, more preferably 0.1 or more and 0.3 or less, still more preferably 0.1 or more and 0.25 or less, and particularly preferably 0.1 or more and 0.2 or less.

The method for calculating the average hole diameter dr of the through-holes of the resin particles and the average outer diameter Dr of the resin particles is the same as the method for calculating the average hole diameter d of the through-holes of the expanded beads and the average outer diameter D of the expanded beads described above except that the resin particles are used instead of the expanded beads.

When the strand cutting method, that is, a method in which a tubular extruded product extruded from a die is cooled in water while being taken up and then cut to an appropriate length is adopted for cutting the extruded product, the particle size, length/outer diameter ratio, and average mass of the resin particles can be adjusted by cutting the extruded product while appropriately changing an extrusion speed, a take-up speed, a cutter speed, and the like during extrusion of the resin melt.

· Dispersion step

In the dispersion step, the resin particles are dispersed in a dispersion medium in a sealed container. As the dispersion medium, an aqueous dispersion medium containing water as a main component is used. In addition to water, the aqueous dispersion medium may include a hydrophilic organic solvent such as ethylene glycol, glycerin, methanol, or ethanol. The ratio of water in the aqueous dispersion medium is preferably 60% by mass or more, more preferably 70% by mass or more, and still more preferably 80% by mass or more.

It is preferable to add a dispersant to the dispersion medium. By adding the dispersant to the dispersion medium, fusion-bonding between the resin particles heated in the container can be curtailed in the expansion step. An amount of the dispersant added is preferably about 0.001 to 5 parts by mass per 100 parts by mass of the resin particles. As the dispersant, although an organic dispersant or an inorganic dispersant can be used, it is preferable to use a fine particulate inorganic substance as the dispersant from the viewpoint of ease of handling. More specifically, as the dispersant, for example, clay minerals such as amsnite, kaolin, mica, and clay, aluminum oxide, titanium oxide, basic magnesium carbonate, basic zinc carbonate, calcium carbonate, iron oxide, and the like can be used. These dispersants may be used alone, or two or more kinds of dispersants may be used in combination. Among them, a clay mineral is preferably used as the dispersant. The clay mineral may be natural or synthetic.

When the dispersant is used, an anionic surfactant such as sodium dodecylbenzenesulfonate, sodium alkylbenzene sulfonate, sodium lauryl sulfate, or sodium oleate is preferably used in combination as a dispersion aid. An amount of the dispersion aid added is preferably 0.001 parts by mass or more and 1 part by mass or less per 100 parts by mass of the resin particles.

· Blowing agent impregnation step

In the blowing agent impregnation step, a blowing agent is supplied into a sealed container to impregnate resin particles in the container with the blowing agent. At this time, in order to promote impregnation of the resin particles with the blowing agent, it is preferable to supply the blowing agent into the sealed container while heating the dispersion medium and the resin particles in the sealed container. As the blowing agent, a physical blowing agent is preferably used. As the physical blowing agent, an inorganic physical blowing agent may be used, or an organic physical blowing agent may be used. Examples of the inorganic physical blowing agent include carbon dioxide, air, nitrogen, helium, and argon. Examples of the organic physical blowing agent include aliphatic hydrocarbons such as propane, butane, and hexane, cyclic aliphatic hydrocarbons such as cyclopentane and cyclohexane, and halogenated hydrocarbons such as chlorofluoromethane, trifluoromethane, 1,1-difluoromethane, 1-chloro-1,1-dichloroethane, 1,2,2,2-tetrafluoroethane, methyl chloride, ethyl chloride, and methylene chloride. These physical blowing agents may be used alone, or two or more physical blowing agents may be used in combination. From the viewpoint of environmental load and handleability, it is preferable to use the inorganic physical blowing agent as the physical blowing agent, and it is more preferable to use carbon dioxide or air.

An amount of the blowing agent added is preferably 0.1 parts by mass or more and 30 parts by mass or less, and more preferably 0.5 parts by mass or more and 15 parts by mass or less with respect to 100 parts by mass of the resin particles.

· Expansion step

In the expansion step, for example, at least the core layer in the resin particle is expanded by releasing a content in the sealed container into an atmosphere having a pressure lower than the pressure in the sealed container. Thereby, expanded beads can be obtained.

The internal pressure of the sealed container at the time of expanding in the expansion step is preferably 0.5 MPa (G) or more as a gauge pressure. On the other hand, the internal pressure of the sealed container is preferably 4.0 MPa (G) or less. When the internal pressure is within the above range, expanded beads can be produced safely without the risk of breakage, explosion, or the like of the sealed container. In the expansion step, by heating an aqueous dispersion medium at a temperature rising rate of 1 to 5°C/min, the temperature at the time of expanding can be set to a suitable range.

· Second expansion step

Although the expanded beads obtained after the expansion step may be used as they are for preparing a molded article, a second expansion step may be performed as necessary thereby further reducing the apparent density. In the second expanding step, first, the expanded beads are put into a pressurizable sealed container, and then the pressure in the sealed container is increased using an inorganic gas such as air to impregnate the expanded beads with the inorganic gas, so that the pressure in the cells of the expanded beads is increased. Thereafter, the expanded beads are heated in the container for a predetermined time with a heating medium such as steam to be thereby further expanded. As a result, the apparent density of the expanded beads can be further reduced.

The production method includes a filling step of filling the polypropylene-based resin expanded beads into a molding space in a pressurized state formed in a mold while compressing the polypropylene-based resin expanded beads with pressurized gas, a pressure release step of restoring the expanded beads in the compressed state to an uncompressed state by releasing a pressure in the mold after the filling step, and a heating step of heating the expanded beads by supplying a heating medium into the mold after the pressure release step to fusion-bond the expanded beads to each other.

· Filling step

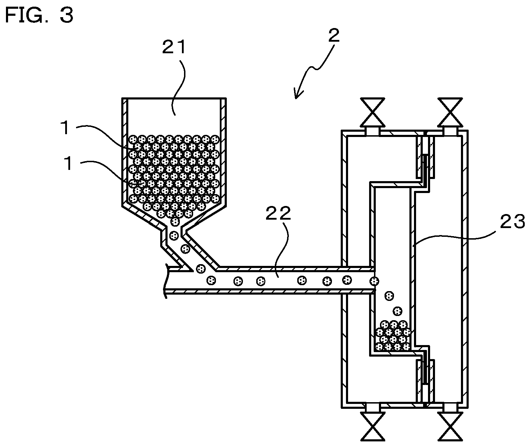

As the manufacturing method, for example, as shown in Fig. 3, a molding apparatus 2 including a filling hopper 21 that accommodates polypropylene-based resin expanded beads 1 and a transfer path 22 that connects the filling hopper 21 and a mold 23 can be used. In the case of using the molding apparatus 2 as described above, first, each of the inside of the filling hopper 21, the inside of the transfer path 22, and the inside of the mold 23 is pressurized by pressurized gas, and the expanded beads 1 accommodated in the filling hopper 21 are compressed. This pressurization is preferably performed such that a pressure (A) in the filling hopper 21 is 0.15 MPa (G) or more and 0.30 MPa (G) or less as the gauge pressure. In this case, the expanded beads 1 accommodated in the filling hopper 21 can be sufficiently compressed, and the filling property of the expanded beads 1 into the mold 23 can be easily enhanced. The pressurized gas that pressurizes the inside of the filling hopper 21, the inside of the transfer path 22, and the inside of the mold 23 is preferably an inorganic gas from the viewpoint of reducing the environmental load, and more preferably air, nitrogen, or carbon dioxide.

Next, the expanded beads 1 compressed in the filling hopper 21 are filled into the mold 23 via the transfer path 22 while maintaining the compressed state. This pressurization is preferably performed such that a pressure (B) in the mold is 0.12 MPa (G) or more and 0.28 MPa (G) or less, and a difference [(A) - (B)] between the pressure (A) in the filling hopper and a pressure (B) in the mold is more than 0 MPa and 0.10 MPa or less. By setting the pressure (B) in the mold within the specific range, the compressed state of the expanded beads 1 is easily maintained until the expanded beads 1 reach the mold 23 from the filling hopper 21. Further, by setting the difference [(A) - (B)] between the pressure (A) in the filling hopper and the pressure (B) in the mold within the specific range, the expanded beads 1 can be more smoothly transferred from the filling hopper 21 to the mold 23. As a result, the filling property of the expanded beads 1 into the mold 23 can be further enhanced.

· Pressure release step

After the filling of the mold 23 with the expanded beads 1 is completed, the transfer path 22 is closed. Thereafter, by releasing the pressure in the mold 23, the expanded beads 1 in the mold 23 are restored to the original shape. Even after this restoration, voids between the expanded beads are still maintained, through which the heating medium to be supplied in the next heating step can sufficiently pass.

· Heating step

After the pressure in the mold 23 is released, in-mold molding is performed in which a heating medium is supplied into the mold to fusion-bond the expanded beads 1 to each other. As the heating medium, steam is preferable.

After the heating step is completed, the molded article is cooled in the mold with water, air, or the like. Thereafter, the molded article is released from the mold, whereby the in-mold molding is completed. Although the released molded article may be subjected to the aging step, the aging step may be omitted as described above.

(Molded article)

The molded article obtained by the manufacturing method includes a large number of expanded beads fusion-bonded to each other. The molded article has minute voids communicating with the outside of the molded article. The minute voids of the molded article are formed by complicatedly connecting voids formed by the through-holes of the plurality of expanded beads communicating with each other, voids formed by the through-holes of the expanded beads communicating with spaces formed between the expanded beads, voids formed by the spaces between the expanded beads communicating with each other, open cell portions of the expanded beads included in the molded article, and the like.

The density of the molded article is preferably 10 kg/m$^3$ or more and 100 kg/m$^3$ or less. In this case, the lightweight and rigidity of the molded article can be improved in a well-balanced manner. From the viewpoint of further improving the rigidity of the molded article, the density of the molded article is more preferably 15 kg/m$^3$ or more, still more preferably 20 kg/m$^3$ or more, and particularly preferably 25 kg/m$^3$ or more. From the viewpoint of further improving the lightweight of the molded article, the density of the molded article is more preferably 45 kg/m$^3$ or less, still more preferably 40 kg/m$^3$ or less, and still more preferably 38 kg/m$^3$ or less. From the viewpoint of improving the rigidity and lightweight of the molded article in a well-balanced manner, the density of the molded article is more preferably 15 kg/m$^3$ or more and 45 kg/m$^3$ or less, still more preferably 20 kg/m$^3$ or more and 40 kg/m$^3$ or less, and particularly preferably 25 kg/m$^3$ or more and 38 kg/m$^3$ or less.

In the past, in the case of manufacturing a molded article having a low density, the significant deformation easily occurs on the molded article after release, and thus it is particularly difficult to omit the aging step. However, the expanded beads make it possible to omit the aging step even when the apparent density is small, and a molded article having a desired shape, excellent appearance and rigidity can be manufactured even without aging. From such a viewpoint, the density of the molded article is preferably set within the above range. The density of the molded article is calculated by dividing the mass (unit: g) of the molded article by the volume (unit: L) obtained from the outer dimension of the molded article and performing unit conversion. When it is not easy to determine the volume from the outer dimension of the mold, the volume of the molded article can be determined by a submersion method.

From the viewpoint that a dimensional change can be more sufficiently curtailed even if the aging step is omitted, a voidage of the molded article is preferably 4% or more, more preferably 4.5% or more, and still more preferably 5% or more. On the other hand, from the viewpoint of further improving the rigidity and appearance of the molded article, the voidage of the molded article is preferably 12% or less, more preferably 10% or less, and still more preferably 8% or less. From the viewpoint of further reducing the shrinkage and deformation of the molded article even when the aging step is omitted and further improving the rigidity and appearance of the molded article, the voidage of the molded article is preferably 4% or more and 12% or less, more preferably 4.5% or more and 10% or less, and still more preferably 5% or more and 8% or less.

A method for measuring the voidage of the molded article is as follows. First, a rectangular parallelepiped test piece is cut out from a central portion of the molded article. The test piece is immersed in a measuring cylinder containing ethanol, and a true volume Vc (unit: L) of the test piece is determined based on the increase in the liquid level of ethanol. In addition, an apparent volume Vd (unit: L) is obtained from an outer dimension of the test piece. The voidage (unit: %) of the molded article can be calculated by the following formula (4) using the true volume Vc and the apparent volume Vd of the test piece.

$$\text{Voidage (\%)} = [(\text{Vd - Vc})/\text{Vd}] \times 100 \ ... \ (4)$$

The molded article is also used as a sound absorbing material, an impact absorbing material, a cushioning material, and the like in various fields such as a vehicle field such as an automobile and a building field.

[Examples]

Examples of the method for manufacturing the molded article of polypropylene-based resin expanded beads will be described below.

(Polypropylene-based resin)

Table 1 shows the properties, etc. of the polypropylene-based resin used for producing expanded beads. All of Ethylene-propylene copolymers and an ethylene-propylene-butene copolymer used in the present examples are random copolymers.

[Table 1]

(Table 1)

| Symbol | Material | Catalyst | Comonomer | Flexural modulus (MPa) | Melting point (°C) | MFR (g / 10 min) |
|---|---|---|---|---|---|---|
| PP1 | Ethylene-propylene random copolymer | Ziegler-Natta | Ethylene 3.1% | 980 | 142 | 8 |
| PP2 | Ethylene-propylene random copolymer | Ziegler-Natta | Ethylene 1.4% | 1470 | 153 | 7 |
| PP3 | Ethylene-propy-lene-butene random copoly-mer | Ziegler-Natta | Ethylene 3.1% Butene 3.8% | 650 | 133 | 6 |

A method for measuring physical properties of the polypropylene-based resins shown in Table 1 is as follows.

· Flexural modulus

A polypropylene-based resin was heat-pressed at 230°C to prepare a 4 mm sheet, and a test piece having a length of 80 mm × a width of 10 mm × a thickness of 4 mm was cut out from the sheet. The flexural modulus of the test piece was determined in accordance with JIS K 7171:2008. A radius R1 of an indenter and a radius R2 of a support base were both 5 mm, an inter-fulcrum distance was 64 mm, and a test speed was 2 mm/min.

· Melting point

The melting point of the polypropylene-based resin was determined based on JIS K7121:1987. Specifically, first, a test piece composed of a polypropylene-based resin was conditioned based on "(2) The case of measurement of melting temperature after a definite heat treatment" described in JIS K 7121:1987. The temperature of the test piece after the conditioning was increased from 30°C to 200°C at a heating rate of 10°C/min to obtain a DSC curve. Then, the vertex temperature of the melting peak appearing in the DSC curve was taken as the melting point. As a measuring apparatus, a heat flux differential scanning calorimeter (manufactured by SII NanoTechnology Inc., model number: DSC 7020) was used.

· Melt flow rate of polypropylene-based resin

A melt flow rate (that is, MFR) of the polypropylene-based resin was measured under conditions of a temperature of 230°C and a load of 2.16 kg in accordance with JIS K 7210-1:2014.

Next, a method for manufacturing a molded article in Examples 1 to 4 and Comparative Examples 1 to 10 will be described.

(Example 1)

As shown in Table 2, the molded article of Example 1 is obtained by performing in-mold molding on expanded beads containing a tubular foamed core layer containing PP1 as a base resin and having a through-hole, and a cover layer containing PP3 as a base resin and covering a side peripheral surface of the foamed core layer. A method for preparing expanded beads is as follows.

· Method for producing expanded bead

In the production of expanded beads, first, using a coextrusion apparatus including an extruder for forming a core layer, an extruder for forming a cover layer, and a coextrusion die connected to these two extruders, an extruded product extruded from the coextrusion apparatus was cut by the strand cutting method to produce multilayer resin particles.

Specifically, PP1 shown in Table 1 and a cell adjusting agent were supplied to the extruder for forming a core layer, and melt-kneaded at a maximum set temperature of 245°C in the extruder to obtain a melt-kneaded product for forming a core layer. Zinc borate was used as the cell adjusting agent, and an amount of zinc borate added was 500 ppm by mass with respect to the polypropylene-based resin.

PP3 shown in Table 1 was melt-kneaded at a maximum set temperature of 245°C in the extruder for forming a cover layer to obtain a melt-kneaded product for forming a cover layer. These melt-kneaded products were co-extruded and joined in the die to form a tubular composite including a tubular core layer in the non-foamed state and a cover layer in the non-foamed state covering the outer surface of the tubular core layer. After the composite was extruded from the die including a small hole for forming a through-hole in the core layer, the extruded product was cooled with cold water at a water temperature of 10°C while being taken up, and cut to an appropriate length using a pelletizer to obtain multilayer resin particles including a tubular core layer which has a through-hole, and a cover layer which covers the core layer. The mass ratio between the core layer and the cover layer in the multilayer resin particles was set to core layer : cover layer = 95 : 5 (that is, the mass ratio of the cover layer was 5%). The mass per multilayer resin particle was about 1.5 mg.

1 kg of the multilayer resin particles thus obtained was put into a sealed container having an internal volume of 5 L together with 3 L of water as a dispersion medium. Next, 0.3 parts by mass of a dispersant and 0.004 parts by mass of a dispersion aid were added to 100 parts by mass of the multilayer resin particles in the sealed container, and the multilayer resin particles were dispersed in the dispersion medium. Kaolin was used as the dispersant. A surfactant (sodium alkylbenzene sulfonate) was used as the dispersion aid.

Thereafter, carbon dioxide as a physical blowing agent was supplied into the sealed container while stirring the inside of the sealed container, and the temperature in the container was raised to 150.1°C. The pressure inside the container (that is, impregnation pressure, carbon dioxide pressure) at this time was 2.6 MPa (G) as a gauge pressure. After the temperature in the container reached 150.1°C, the multilayer resin particles were impregnated with the physical blowing agent by maintaining the temperature for 15 minutes. After the impregnation of the physical blowing agent was completed, a lower end of the sealed container was opened, and the content was released into atmospheric pressure to expand the multilayer resin particles. As described above, expanded beads including a foamed core layer and a cover layer were obtained. Various properties of the expanded beads thus obtained are shown in Table 2. A method for evaluating various properties of the expanded beads will be described later.

· Method for producing molded article

In the production of the molded article, the molding apparatus 2 shown in Fig. 3 including the filling hopper 21 that accommodates polypropylene-based resin expanded beads 1 and the transfer path 22 that connects the filling hopper 21 and the mold 23 was used. As the mold 23, a flat plate mold capable of molding a flat plate-shaped molded article of 300 mm in length × 250 mm in width × 60 mm in thickness was used.

First, the expanded beads obtained by the above-described method were dried at a temperature of 23°C for 24 hours, and then put into the filling hopper 21. The pressure in the cells in the expanded beads put into the filling hopper 21 was set to 0 MPa (G) as the gauge pressure. That is, in the present example, the expanded beads were put into the filling hopper 21 without being subjected to the internal pressure applying step of increasing the pressure in the cells.

Next, the inside of the filling hopper 21, the inside of the transfer path 22, and the inside of the mold 23 were pressurized using compressed air as pressurized gas, and the expanded beads 1 in the filling hopper 21 were compressed. The pressure (A) in the filling hopper 21 and the pressure (B) in the mold 23 were set as shown in Table 2. Thereafter, the expanded beads 1 compressed in the filling hopper 21 were supplied from the transfer path 22 into the mold 23 while maintaining the compressed state, and the expanded beads 1 were filled in the mold 23. The compression ratio P of the expanded beads at the time of the completion of the filling was set as shown in Table 2. An inner dimension of the cavity of the mold 23 is 300 mm in length × 250 mm in width × 60 mm in thickness.

After the filling of the mold 23 with the expanded beads 1 was completed, the transfer path 22 was closed. Then, by releasing the pressure in the mold 23, the shape of the expanded beads 1 in the mold 23 was restored to the original shape. Thereafter, steam as a heating medium was supplied into the mold to perform in-mold molding of the expanded beads 1, thereby obtaining a flat plate-shaped molded article of 300 mm in length × 250 mm in width × 60 mm in thickness.

More specifically, the in-mold molding was performed by the following procedure. First, after the transfer path 22 was closed, an exhaust step of supplying steam from both surfaces in the thickness direction of the mold for 5 seconds to preheat the mold was performed. Thereafter, steam was supplied from one surface side of the mold to perform one-side heating until the pressure of the steam became lower than the molding pressure shown in Table 2 by 0.08 MPa (G). Next, steam was supplied from the other surface side of the mold to perform one-side heating until the pressure of the steam became lower than the molding pressure shown in Table 2 by 0.04 MPa. Thereafter, steam was supplied from both surfaces of the mold to perform main heating until the pressure of the steam reached the molding pressure shown in Table 2. After the main heating was completed, the pressure in the mold was released, and the molded article was cooled with water in the mold until the surface pressure due to the expanding force of the molded article reached 0.04 MPa (G).

Thereafter, the molded article was taken out from the mold. The released molded article was allowed to stand in an oven at 80°C for 12 hours to perform the aging step. After the aging step, the molded article was left to stand for 24 hours under conditions of a relative humidity of 50%, 23°C, and 1 atm to thereby condition the molded article. Various properties of the molded article thus obtained are shown in Table 2. A method for evaluating various properties of the molded article will be described later.

(Example 2 and Example 3)

In Examples 2 and 3, molded articles were produced by the same method as in Example 1, except that the pressure (A) in the filling hopper and the pressure in the transfer path when the expanded beads were filled into the mold were changed to the values shown in Table 2, and the compression ratio P of the expanded beads in the mold was made higher than that in Example 1.

(Example 4)

In this example, a molded article was produced by the same method as in Example 1 except that expanded beads including a foamed core layer containing PP2 as a base resin and a cover layer containing PP3 as a base resin and covering the foamed core layer were used as shown in Table 2.

(Example 5)

In this example, the internal pressure applying step was performed in advance, and compression filling and in-mold molding were performed using expanded beads in which the pressure in cells has been increased. Specifically, the same expanded beads as in Example 1 were pressurized with compressed air to increase the internal pressure of the expanded beads (that is, the pressure in the cell) to 0.08 MPa (G). The expanded beads were put into the filling hopper 21, and then the pressure (A) in the filling hopper and the pressure in the transfer path at the time of filling the expanded beads into the mold were changed to the values shown in Table 2, and the compression ratio P of the expanded beads in the mold was made lower than that in Example 1. The procedure and conditions of the in-mold molding in this example are the same as those in Example 1.

(Comparative Example 1)

In this example, a molded article was produced by the same method as in Example 1, except that the pressure (A) in the filling hopper and the pressure in the transfer path when the expanded beads were filled into the mold were changed to the values shown in Table 3, whereby the compression ratio P of the expanded beads in the mold was made sufficiently lower than that in Example 1.

(Comparative Example 2)

In this example, the compression ratio P of the expanded beads in the mold was made higher than that in Example 3. Specifically, the pressure (A) in the filling hopper and the pressure in the transfer path when the expanded beads were filled in the mold were changed to the values shown in Table 3. Since the compression ratio P of the expanded beads increased, a good molded article could not be obtained at the same molding pressure as in Example 3, and therefore the molding pressure was changed to the value shown in Table 3. A molded article was produced by the same method as in Example 3 except for these points.

(Comparative Example 3 and Comparative Example 4)

In Comparative Example 3 and Comparative Example 4, as shown in Table 3, solid spherical polypropylene-based resin expanded beads including a foamed core layer that has no through-hole and a cover layer that covers the foamed core layer were used, and molded articles were produced by the same method as in Example 1 except that the molding conditions were changed as shown in Table 3.

(Comparative Example 5 to 7)

In Comparative Examples 5 to 7, molded articles were produced by the same method as in Example 1 except that expanded beads having a large average hole diameter d of the through-holes were used as shown in Tables 3 and 4 and the molding conditions were changed as shown in Tables 3 and 4.

(Comparative Example 8 to 10)

In Comparative Examples 8 to 10, molded articles were produced by the same method as in Example 1, although including some exceptions as follows. That is, expanded beads used in those Examples each include a foamed core layer that contains PP2 as a base resin and a cover layer that contains PP3 as a base resin and covers the foamed core layer. The foamed core layers have a through-hole of which an average hole diameter d is large. And the molding conditions were changed as shown in Table 4.

Methods for evaluating various properties of expanded beads and molded articles in Examples and Comparative Examples shown in Tables 2 to 4 are as follows.

· Average hole diameter d of through-holes

The average hole diameter d of the through-holes of the expanded beads was determined as follows. First, the expanded beads were left to stand for 24 hours or longer in an environment of a relative humidity of 50%, a temperature of 23°C, and an atmospheric pressure of 1 atm to condition the expanded beads. Each of the 100 expanded beads randomly selected from the expanded bead group after the conditioning was cut perpendicularly to the penetration direction of the through-hole at a position where the area of the cut surface was substantially the maximum. A photograph of the cut surface of each expanded bead was taken, and the cross-sectional area (opening area) of a through-hole portion in the cross-sectional photograph was obtained. The diameter of a virtual perfect circle having the same area as the cross-sectional area was calculated, and the arithmetic average value thereof was taken as the average hole diameter d (unit: mm) of the through-holes of the expanded beads.

· Bulk density

The expanded beads were left to stand for 24 hours or more in an environment of a relative humidity of 50%, a temperature of 23°C, and an atmospheric pressure of 1 atm to thereby condition the expanded beads. The expanded beads after the conditioning were filled up to a scale of 1 L in a measuring cylinder having a volume of 1 L so as to be in a natural deposition state. Then, the bulk density (unit: $kg/m^3$) of the expanded bead was calculated by dividing the mass (unit: g) of the expanded beads in the measuring cylinder by the bulk volume (that is, 1 L) and then converting the unit.

· Apparent density

The expanded beads were left to stand for 24 hours or longer in an environment of a relative humidity of 50%, a temperature of 23°C, and an atmospheric pressure of 1 atm to thereby condition the expanded beads. The mass of the expanded beads after the conditioning was measured, and then the expanded bead group was submerged in a measuring cylinder containing ethanol at a temperature of 23°C using a wire mesh. Then, in consideration of the volume of the wire mesh, the volume of the expanded beads read from a water level rise was measured. The apparent density (unit: $kg/m^3$) of the expanded bead was calculated by dividing the mass (unit: g) of the expanded beads thus obtained by the volume (unit: L) and then converting the unit.

· Average outer diameter D of expanded beads

The average outer diameter D of the expanded beads was determined as follows. First, the expanded beads were left to stand for 24 hours or longer in an environment of a relative humidity of 50%, a temperature of 23°C, and an atmospheric pressure of 1 atm to thereby condition the expanded beads. Each of the 100 expanded beads randomly selected from the expanded bead group after the conditioning was cut perpendicularly to the penetration direction of the through-hole at a position where the area of the cut surface was substantially the maximum. A photograph of the cut surface of each expanded bead was taken to determine the cross-sectional area of the expanded bead (including the opening of the through-hole). The diameter of a virtual perfect circle having the same area as the cross-sectional area was calculated, and the arithmetic average value thereof was taken as the average outer diameter D (unit: mm) of the expanded beads. Tables 2 to 4 also show the value of the ratio d/D of the average hole diameter d of the through-holes to the average outer diameter D of the expanded beads.

· Circularity of through-hole

The circularity of the expanded bead was determined as follows. First, the expanded beads were left to stand for 24 hours or longer in an environment of a relative humidity of 50%, a temperature of 23°C, and an atmospheric pressure of 1 atm to thereby condition the expanded bead. Each of the 100 expanded beads randomly selected from the expanded bead group after the conditioning was cut perpendicularly to the penetration direction of the through-hole at a position where the area of the cut surface was substantially the maximum. Next, a photograph of a cut surface of each expanded bead was taken, and the cross-sectional area S (opening area) and the peripheral length C (circumference) of the through-hole portion were obtained. The circularity of the through-hole of each expanded bead was calculated based on the following formula (2), and then the circularity of the through-holes of 100 expanded beads was arithmetically averaged to calculate an average value of the circularity of the through-holes.

$$\text{Circularity} = 4\pi S/(C \times C) \ ... \ (2)$$

· Average wall thickness

Using the average outer diameter D (unit: mm) of the expanded beads and the average hole diameter d (unit: mm) of the through-holes respectively obtained by the method described above, the average wall thickness t was calculated by the following formula (3).

$$t = (D\text{-}d)/2 \qquad ... \ (3)$$

· Cooling time

When the expanded beads were subjected to in-mold molding, the time from the time point when the main heating was completed to the time point when the surface pressure due to the expanding force of the molded article reached 0.04 MPa (G) was measured, and the time was defined as the cooling time.

· Density of molded article

The density (unit: kg/m$^3$) of the molded article was calculated by dividing the mass (unit: g) of the molded article by the volume (unit: L) obtained from the outer dimension of the molded article and then performing unit conversion. Tables 2 to 4 also show a ratio (molded article density/expanded beads bulk density) of the density of the molded article to the bulk density of the expanded beads. It means that the smaller the value of the ratio of the densities, the more effectively the bulk density of the original expanded beads could be utilized to obtain a lightweight molded article.

· Moisture content

**In** the in-mold molding, a weight Ww (unit: g) of the molded article immediately after being taken out from the mold was measured. Thereafter, the molded article was allowed to stand in an oven at 80°C for 12 hours and dried, and the weight Wd (unit: g) of the dried molded article was measured. Using these values, the moisture content (unit: %) of the molded article was calculated based on the following formula (5).

$$\text{Moisture content } (\%) = [(Ww - Wd)/Ww] \times 100 \ ... \ (5)$$

· Voidage

A test piece having a rectangular parallelepiped shape (20 mm in length × 100 mm in width × 20 mm in height) was cut out from the central portion of the molded article. The test piece was immersed in a measuring cylinder containing ethanol, and the true volume Vc (unit: L) of the test piece was determined from the increase in the liquid level of ethanol. In addition, the apparent volume Vd (unit: L) was obtained from an outer dimension of the test piece. The voidage of the molded article was calculated from the true volume Vc and the apparent volume Vd of the molded article based on the following formula (4).

$$\text{Voidage } (\%) = [(Vd - Vc)/Vd] \times 100 \ ... \ (4)$$

· Appearance of molded article

The appearance of the molded article was evaluated based on the results of visual observation of the molded article. In the "appearance" column in Tables 2 to 4, a symbol "A" was described when the number of gaps between the expanded beads was small on the surface of the molded article and the irregularities caused by the through-holes and the like were not conspicuous, a symbol "B" was described when the space(s) between beads and/or the irregularities caused by the through-hole and the like were slightly observed on the surface of the molded article, and a symbol "C" was described when the space(s) between beads and/or the irregularities caused by the through-hole and the like were remarkably observed on the surface of the molded article.

· Fusion bondability

The molded article was bent so as to be substantially equally divided in the length direction and broken. Thereafter, the broken surface of the test piece was observed, and the number of expanded beads in which the expanded beads themselves were broken (material fracture) and the number of expanded beads peeled off between interfaces of the expanded beads were each visually counted. Then, a ratio of the number of expanded beads on which material fracture occurred to the total number of expanded beads present on the broken surface was calculated, and the value expressed as a percentage was taken as a material fracture rate (unit: %) of the test piece.

In the "fusion bondability" column in Tables 2 to 4, the symbol "A" was described when the arithmetic average value of the material fracture rate was 90% or more, the symbol "B" was described when the arithmetic average value was 70% or more and less than 90%, and the symbol "C" was described when the arithmetic average value was less than 70%.

· Recoverability

The recoverability of the shape of the molded article was evaluated based on the shrinkage and deformation of the molded article after the aging step. Specifically, in a plan view of the molded article viewed from the thickness direction, the thickness of the molded article at four positions 10 mm inward from respective vertices in the center direction and the thickness of the molded article at the central portion were measured. Next, a ratio (unit: %) of the thickness of the central portion to the thickness of the thickest position among the four measurement positions near the vertices was calculated. In the column of "recoverability" in Tables 2 to 4, the symbol "A" was described when the thickness ratio was 95% or more, and the symbol "B" was described when the thickness ratio was less than 95%.

In the evaluation of the molded article, a molded article having "A" in all of the evaluations of appearance, fusion bondability, and recoverability can be judged as a "good molded article".

· Shape stability when aging step is omitted

In the manufacturing method described above, the molded article was removed from the mold, and then the molded article not subjected to the aging step was used to evaluate the shape stability. Specifically, the released molded article was left to stand for 24 hours under conditions of a relative humidity of 50%, 23°C, and 1 atm to thereby condition the molded article. Then, similarly to the evaluation of the recoverability as described above, the thickness at the positions near the vertices and the thickness at the central portion in the molded article after the conditioning were measured, and the ratio (unit: %) of the thickness at the central portion to the thickness at the thickest position among the four measurement positions near the vertices was calculated.

In the column of "shape stability" in Tables 2 to 4, the symbol "A" was described when the thickness ratio was 95% or more, and the symbol "B" was described when the thickness ratio was less than 95%. The symbol "A" in the evaluation of the shape stability when the aging step is omitted means that the shrinkage and deformation of the molded article are curtailed and a good molded article can be obtained even when the aging step is omitted. When a good molded article was not obtained after the aging step was performed, that is, when the determination of one or more of the appearance, fusion bondability, and recoverability described above was other than "A", the shape stability when the aging step was omitted was not evaluated. For an example in which the evaluation of the shape stability at the time of omitting the aging step was not performed, the symbol "-" was described in the same column.

[Table 2]

**EP 4 406 997 B1**

(Table 2)

| | | Unit | Example 1 | Example 2 | Example 3 | Example 4 | Example 5 |
|---|---|---|---|---|---|---|---|
| Expanded bead | Foamed core layer | - | PP1 | PP1 | PP1 | PP2 | PP1 |
| | Cover layer | - | PP3 | PP3 | PP3 | PP3 | PP3 |
| | Bulk density | kg/m$^3$ | 25.1 | 25.1 | 25.1 | 25 | 25.1 |
| | Apparent density | kg/m$^3$ | 42.8 | 42.8 | 42.8 | 44.9 | 42.8 |
| | Apparent density/-bulk density | - | 1.71 | 1.71 | 1.71 | 1.80 | 1.71 |
| | Expanded bead shape | - | Tubular | Tubular | Tubular | Tubular | Tubular |
| | Average hole diameter d of through-holes | mm | 0.70 | 0.70 | 0.70 | 0.71 | 0.70 |
| | Average outer diameter D | mm | 3.63 | 3.63 | 3.63 | 3.69 | 3.63 |
| | d/D | - | 0.19 | 0.19 | 0.19 | 0.19 | 0.19 |
| | Average wall thickness t | mm | 1.47 | 1.47 | 1.47 | 1.49 | 1.47 |
| | Circularity of through-holes | - | 0.97 | 0.97 | 0.97 | 0.96 | 0.97 |
| Molding step | Internal pressure applying step | - | Not performed | Not performed | Not performed | Not performed | Performed |
| | Pressure in hopper (A) | MPa (G) | 0.17 | 0.22 | 0.27 | 0.17 | 0.12 |
| | Pressure in mold (B) | MPa (G) | 0.15 | 0.20 | 0.25 | 0.15 | 0.10 |
| | Compression ratio P | % | 32.4 | 62.9 | 72.0 | 31.2 | 21.0 |
| | Molding pressure | MPa (G) | 0.30 | 0.30 | 0.30 | 0.30 | 0.30 |
| | Cooling time | sec | 5 | 32 | 45 | 5 | 5 |
| Molded article | Density | kg/m$^3$ | 36.3 | 44.1 | 47.8 | 35.1 | 32.1 |
| | Molded article density/ Expanded beads bulk density | - | 1.4 | 1.8 | 1.9 | 1.4 | 1.3 |
| | Moisture content | % by mass | 8.5 | 8.1 | 7.8 | 8.3 | 9.2 |
| | Voidage | % | 7.3 | 6.0 | 6.1 | 7.5 | 8.3 |
| | Appearance | - | A | A | A | A | A |
| | Fusion bondability | - | A | A | A | A | A |
| | Recoverability | - | A | A | A | A | A |
| | Shape stability | - | A | A | A | A | A |

[Table 3]

(Table 3)

| | | | Unit | Comparative Example 1 | Comparative Example 2 | Comparative Example 3 | Comparative Example 4 | Comparative Example 5 |
|---|---|---|---|---|---|---|---|---|
| Expanded bead | | Foamed core layer | - | PP1 | PP1 | PP1 | PP1 | PP1 |
| | | Cover layer | - | PP3 | PP3 | PP3 | PP3 | PP3 |
| | | Bulk density | kg/m$^3$ | 25.1 | 25.1 | 28.2 | 28.2 | 22.0 |
| | | Apparent density | kg/m$^3$ | 42.8 | 42.8 | 45.1 | 45.1 | 50.5 |
| | | Apparent density/bulk density | - | 1.71 | 1.71 | 1.60 | 1.60 | 2.30 |
| | | Expanded bead shape | - | Tubular | Tubular | Solid spherical | Solid spherical | Tubular |
| | | Average hole diameter d of through-holes | mm | 0.70 | 0.70 | - | - | 3.31 |
| | | Average outer diameter D | mm | 3.63 | 3.63 | 3.71 | 3.71 | 3.78 |
| | | d/D | - | 0.19 | 0.19 | - | - | 0.88 |
| | | Average wall thickness t | mm | 1.47 | 1.47 | - | - | 0.24 |
| | | Circularity of through-holes | - | 0.97 | 0.97 | - | - | 0.95 |
| Molding step | | Internal pressure applying step | - | Not performed | Not performed | Not performed | Not performed | Not performed |
| | | Pressure in hopper (A) | MPa (G) | 0.12 | 0.32 | 0.17 | 0.22 | 0.17 |
| | | Pressure in mold (B) | MPa (G) | 0.10 | 0.30 | 0.15 | 0.20 | 0.15 |
| | | Compression ratio P | % | 14.8 | 93.0 | 48.6 | 71.5 | 25.0 |
| | | Molding pressure | MPa (G) | 0.30 | 0.32 | 0.30 | 0.30 | 0.30 |
| | | Cooling time | sec | 1 | 73 | 78 | 120 | 1 |

**EP 4 406 997 B1**

(continued)

| | | | Unit | Comparative Example 1 | Comparative Example 2 | Comparative Example 3 | Comparative Example 4 | Comparative Example 5 |
|---|---|---|---|---|---|---|---|---|
| Molded article | | Density | kg/m$^3$ | 32.0 | 55.2 | 44.8 | 51.7 | 30.5 |
| | | Molded article density/ Expanded beads bulk density | - | 1.3 | 2.2 | 1.6 | 1.8 | 1.4 |
| | | Moisture content | % by mass | 34.2 | 6.8 | 3.6 | 3.3 | 45.7 |
| | | Voidage | % | 11.5 | 6.1 | 7.6 | 6.2 | 28.7 |
| | | Appearance | - | B | A | A | A | C |
| | | Fusion bondability | - | A | A | A | C | A |
| | | Recoverability | - | A | A | A | A | A |
| | | Shape stability | - | - | B | B | - | - |

[Table 4]

(Table 4)

| | | | Unit | Comparative Example 6 | Comparative Example 7 | Comparative Example 8 | Comparative Example 9 | Comparative Example 10 |
|---|---|---|---|---|---|---|---|---|
| Expanded bead | | Foamed core layer | - | PP1 | PP1 | PP2 | PP2 | PP2 |
| | | Cover layer | - | PP3 | PP3 | PP3 | PP3 | PP3 |
| | | Bulk density | kg/m$^3$ | 22.0 | 22.0 | 24.3 | 24.3 | 24.3 |
| | | Apparent density | kg/m$^3$ | 50.5 | 50.5 | 49.9 | 49.9 | 49.9 |
| | | Apparent density/bulk density | - | 2.30 | 2.30 | 2.05 | 2.05 | 2.05 |
| | | Expanded bead shape | - | Tubular | Tubular | Tubular | Tubular | Tubular |
| | | Average hole diameter d of through-holes | mm | 3.31 | 3.31 | 1.55 | 1.55 | 1.55 |
| | | Average outer diameter D | mm | 3.78 | 3.78 | 3.56 | 3.56 | 3.56 |
| | | d/D | - | 0.88 | 0.88 | 0.44 | 0.44 | 0.44 |
| | | Average wall thickness t | mm | 0.24 | 0.24 | 1.01 | 1.01 | 1.01 |
| | | Circularity of through-holes | - | 0.95 | 0.95 | 0.98 | 0.98 | 0.98 |

23

(continued)

| | | Unit | Comparative Example 6 | Comparative Example 7 | Comparative Example 8 | Comparative Example 9 | Comparative Example 10 |
|---|---|---|---|---|---|---|---|
| Molding step | Internal pressure applying step | - | Not performed | Not performed | Not performed | Not performed | Not performed |
| | Pressure in hopper (A) | MPa (G) | 0.22 | 0.27 | 0.17 | 0.22 | 0.37 |
| | Pressure in mold (B) | MPa (G) | 0.20 | 0.25 | 0.15 | 0.20 | 0.35 |
| | Compression ratio P | % | 56.2 | 81.7 | 34.3 | 54.1 | 105.3 |
| | Molding pressure | MPa (G) | 0.30 | 0.30 | 0.34 | 0.34 | 0.36 |
| | Cooling time | sec | 2 | 6 | 1 | 2 | 28 |
| Molded article | Density | kg/m$^3$ | 40.1 | 43.5 | 35.1 | 40.2 | 58.3 |
| | Molded article density/ Expanded beads bulk density | - | 1.8 | 2.0 | 1.4 | 1.7 | 2.4 |
| | Moisture content | % by mass | 18.3 | 13.7 | 54.9 | 31.6 | 10.2 |
| | Voidage | % | 13.8 | 10.8 | 16.1 | 11.2 | 7.4 |
| | Appearance | - | C | B | C | B | A |
| | Fusion bondability | - | A | A | A | A | A |
| | Recoverability | - | A | A | A | A | A |
| | Shape stability | - | - | - | - | - | B |

As shown in Table 2, in Examples 1 to 5, expanded beads having the specific shape are filled into the mold by compression filling. The compression ratio P of the expanded beads filled in the mold is within the above-mentioned specific range. Thus, according to the method of each of Examples 1 to 5, the filling property of the expanded beads into the mold can be enhanced, and the cooling time after the in-mold molding can be shortened. The molded article obtained by the method of each of Examples 1 to 5 has a good appearance and is also excellent in fusion bondability between expanded beads. In addition, the moisture content of the molded article immediately after release was low, and the molded article was excellent in handleability. Furthermore, according to the manufacturing method of each of Examples 1 to 5, a good molded article in which the shrinkage and deformation are curtailed even when the aging step is not performed can be obtained.

On the other hand, as shown in Table 3, in Comparative Example 1, since the compression ratio P of the expanded beads is too low, the filling of the expanded beads into the mold tends to be insufficient. Thus, gap(s) between the expanded beads and the like are likely to be formed on the surface of the molded article, and it is difficult to obtain a molded article having a good appearance.

In Comparative Example 2, the compression ratio P of the expanded beads is too high, and the expanded beads in the mold are likely to be excessively compressed. Thus, the ratio of the molded article density to the bulk density of the expanded beads exceeds 2.0, and it becomes difficult to obtain a lightweight molded article utilizing the bulk density of the original expanded beads. In addition, the time required for cooling the molded article in the mold tends to be long. Moreover, it is necessary to increase the molding pressure in order to sufficiently fusion-bond the expanded beads to each other, and it is necessary to perform the aging step in order to curtail the shrinkage and deformation of the molded article.

In Comparative Example 3, since the solid spherical expanded beads having no through-hole are used, the time required for cooling the molded article in the mold tends to be long. When the solid spherical expanded beads are used, it is necessary to perform the aging step in order to curtail the shrinkage and deformation of the molded article.

When the compression ratio of the solid spherical expanded beads is increased as in Comparative Example 4, it is difficult to supply steam sufficiently to the inside during in-mold molding, and thus, it is difficult to satisfactorily fusion-bond the expanded beads to each other. In addition, the time required for cooling the molded article in the mold tends to be significantly long. Therefore, it is found that it is difficult to increase the compression ratio when the solid spherical expanded beads are used.

As shown in Tables 3 and 4, in Comparative Examples 5 to 7, since expanded beads having a large hole diameter of the through-hole were used, gaps between the expanded beads and irregularities derived from the through-hole were likely to be formed on the surface of the molded article obtained after in-mold molding. Thus, it is difficult to obtain a molded article having a good appearance. In addition, even when the compression ratio is increased, the appearance cannot be sufficiently improved.

In Comparative Example 8 and Comparative Example 9, although the hole diameter of the through-hole of the expanded bead is smaller than that in Comparative Examples 5 to 7, the hole diameter of the through-hole is larger than that in Examples 1 to 5, and thus gaps between the expanded beads and irregularities derived from the through-hole are likely to be formed on the surface of the molded article obtained after in-mold molding. Thus, it is difficult to obtain a molded article having a good appearance.

In Comparative Example 10, in order to obtain a molded article having a good appearance, as a result of setting the compression ratio P of the expanded beads to be higher than those in Comparative Example 8 and Comparative Example 9, the expanded beads in the mold are likely to be excessively compressed. Thus, the ratio of the molded article density to the bulk density of the expanded beads exceeds 2.0, and it becomes difficult to obtain a lightweight molded article. In addition, it is necessary to increase the molding pressure in order to sufficiently fusion-bond the expanded beads to each other. As a result, it is necessary to perform the aging step in order to curtail the shrinkage and deformation of the molded article.

Although the specific aspect of the method for manufacturing a molded article of polypropylene-based resin expanded beads has been described above based on Examples, the specific aspect of the method for manufacturing a molded article of polypropylene-based resin expanded beads according to the present invention is not limited to the aspect of Examples, and is defined in the claims.

**Claims**

1. A method for manufacturing a molded article of polypropylene-based resin expanded beads, the method comprising filling a mold with polypropylene-based resin expanded beads in a state of being compressed by pressurized gas, and then supplying a heating medium into the mold to perform in-mold molding on the polypropylene-based resin expanded beads in the mold, wherein

   the polypropylene-based resin expanded beads each have a tubular shape with a through-hole, an average hole diameter d of the through-holes of the polypropylene-based resin expanded beads is 0.1 mm or more and less than 1 mm, a ratio d/D of the average hole diameter d of the through-holes to an average outer diameter D of the polypropylene-based resin expanded beads is 0.4 or less, the average hole diameter d and the average outer diameter D being determined as described in the description, and
   **characterized in that**
   a compression ratio P of the polypropylene-based resin expanded beads in a state of being filled in the mold, which is represented by the following formula (1), is more than 25% and 80% or less:

$$P = [\{a/(b \times c)\} - 1] \times 100 \ \ ... \ (1)$$

   (in the formula (1), a represents a mass (unit: kg) of the polypropylene-based resin expanded beads filled in the mold, b represents a bulk density (unit: kg/m$^3$) of the polypropylene-based resin expanded beads calculated as described in the description, and c represents an internal volume (unit: m$^3$) of the mold).

2. The method for manufacturing a molded article of polypropylene-based resin expanded beads according to claim 1, wherein a ratio of an apparent density of the polypropylene-based resin expanded beads, calculated as described in the description, to a bulk density of the polypropylene-based resin expanded beads is more than 1.6 and 2.0 or less.

3. The method for manufacturing a molded article of polypropylene-based resin expanded beads according to claim 1 or 2, wherein the through-hole of the polypropylene-based resin expanded bead has a circularity of 0.90 or more calculated as described in the description.

4. The method for manufacturing a molded article of polypropylene-based resin expanded beads according to any one of claims 1 to 3, wherein a polypropylene-based resin which is a base resin of the polypropylene-based resin expanded beads is an ethylene-propylene random copolymer, and a content of an ethylene component in the ethylene-propylene random copolymer is 0.5% by mass or more and 3.5% by mass or less.

5. The method for manufacturing a molded article of polypropylene-based resin expanded beads according to any one of claims 1 to 4, wherein a flexural modulus of the polypropylene-based resin which is the base resin of the polypropylene-based resin expanded beads is 800 MPa or more and 1600 MPa or less determined based on JIS K 7171:2008.

6. The method for manufacturing a molded article of polypropylene-based resin expanded beads according to any one of claims 1 to 5, wherein each polypropylene-based resin expanded bead includes a foamed core layer containing a polypropylene-based resin as a base resin and a cover layer covering the foamed core layer, and the base resin of the cover layer is a polyolefin-based resin having a melting point lower than a melting point of the polypropylene-based resin.

7. The method for manufacturing a molded article of polypropylene-based resin expanded beads according to any one of claims 1 to 6, wherein a bulk density of the polypropylene-based resin expanded beads is 10 kg/m$^3$ or more and 50 kg/m$^3$ or less.

8. The method for manufacturing a molded article of polypropylene-based resin expanded beads according to any one of claims 1 to 7, wherein

   a molding apparatus including a filling hopper that accommodates the polypropylene-based resin expanded beads and a transfer path that connects the filling hopper and the mold is used,
   the method comprises:

   compressing the polypropylene-based resin expanded beads accommodated in the filling hopper by pressurizing an inside of the filling hopper, an inside of the transfer path, and an inside of the mold with the pressurizing gas in such a way that a pressure (A) in the filling hopper becomes 0.15 MPa (G) or more and 0.30 MPa (G) or less, a pressure (B) in the mold becomes 0.12 MPa (G) or more and 0.28 MPa (G) or less, and a difference [(A) - (B)] between the pressure (A) in the filling hopper and the pressure (B) in the mold becomes more than 0 MPa and 0.10 MPa or less, and
   filling the polypropylene-based resin expanded beads into the mold from the filling hopper into the mold through the transfer path while maintaining a compressed state of the polypropylene-based resin expanded beads.

**Patentansprüche**

1. Verfahren zum Herstellen eines geformten Artikels aus Polypropylen-basierten expandierten Harzkügelchen, welches Verfahren Füllen einer Form mit Polypropylen-basierten expandierten Harzkügelchen in einem Zustand, in dem diese durch Druckgas komprimiert sind, und dann Zuführen eines Heizmediums in die Form zum Ausführen eines In-Mold-Formens mit den Polypropylen-basierten expandierten Harzkügelchen in der Form aufweist, bei dem

   die Polypropylen-basierten expandierten Harzkügelchen jeweils eine Röhrenform mit einem Durchgangsloch, ein Durchschnittslochdurchmesser d der Durchgangslöcher der Polypropylen-basierten expandierten Harzkügelchen 0,1 mm oder mehr und 1 mm oder weniger ist, ein Verhältnis d/D des Durchschnittslochdurchmessers d der Durchgangslöcher zu einem Durchschnittsaußendurchmesser D der Polypropylen-basierten expandierten Harzkügelchen 0,4 oder weniger ist, der Durchschnittslochdurchmesser d und der Durchschnittsaußendurchmesser D, wie in der Beschreibung beschrieben, bestimmt werden, aufweisen, und
   **dadurch gekennzeichnet, dass**
   ein Kompressionsverhältnis P der Polypropylen-basierten expandierten Harzkügelchen in einem Zustand, in dem diese in die Form gefüllt sind, das durch die folgende Formel (1) dargestellt ist, mehr als 25% und 80% oder weniger ist:

$$P = [\{a/(b \times c)\}-1] \times 100 \ldots (1)$$

(in der Formel (1) stellt a eine Masse (Einheit: kg) der Polypropylen-basierten expandierten Harzkügelchen, die in die Form gefüllt sind, dar, stellt b eine Reindichte (Einheit: kg/m$^3$) der Polypropylen-basierten expandierten Harzkügelchen dar, die, wie in der Beschreibung beschrieben, berechnet wird, und stellt c ein Innenvolumen (Einheit: m$^3$) der Form dar).

2. Verfahren zum Herstellen eines geformten Artikels aus Polypropylen-basierten expandierten Harzkügelchen nach Anspruch 1, bei dem ein Verhältnis einer Schüttdichte der Polypropylen-basierten expandierten Harzkügelchen, die, wie in der Beschreibung beschrieben, berechnet wird, zu einer Reindichte der Polypropylen-basierten expandierten Harzkügelchen mehr als 1,6 und 2,0 oder weniger ist.

3. Verfahren zum Herstellen eines geformten Artikels aus Polypropylen-basierten expandierten Harzkügelchen nach Anspruch 1 oder 2, bei dem das Durchgangsloch des Polypropylen-basierten expandierten Harzkügelchens eine Kreisförmigkeit von 0,90 oder mehr aufweist, die, wie in der Beschreibung beschrieben, berechnet wird.

4. Verfahren zum Herstellen eines geformten Artikels aus Polypropylen-basierten expandierten Harzkügelchen nach einem der Ansprüche 1 bis 3, bei dem ein Polypropylenbasiertes Harz, das ein Basisharz der Polypropylen-basierten expandierten Harzkügelchen ist, ein statistisches Ethylen-Propylen-Copolymer ist und ein Gehalt einer Ethylen-Komponente in dem statistischen Ethylen-Propylen-Copolymer 0,5 Masse% oder mehr und 3,5 Masse% oder weniger ist.

5. Verfahren zum Herstellen eines geformten Artikels aus Polypropylen-basierten expandierten Harzkügelchen nach einem der Ansprüche 1 bis 4, bei dem ein Biegemodul des Polypropylen-basierten Harzes, das das Basisharz der Polypropylen-basierten expandierten Harzkügelchen ist, 800 MPa oder mehr und 1600 MPa oder weniger ist, bestimmt basierend auf JIS K 7171:2008.

6. Verfahren zum Herstellen eines geformten Artikels aus Polypropylen-basierten expandierten Harzkügelchen nach einem der Ansprüche 1 bis 5, bei dem jedes Polypropylenbasierte expandierte Harzkügelchen eine geschäumte Kernschicht, die ein Polypropylenbasiertes Harz als ein Basisharz enthält, und eine Abdeckschicht, die die geschäumte Kernschicht abdeckt, aufweist, und das Basisharz der Abdeckschicht ein Polyolefin-basiertes Harz ist, das einen Schmelzpunkt aufweist, der geringer ist als ein Schmelzpunkt des Polypropylen-basierten Harzes.

7. Verfahren zum Herstellen eines geformten Artikels aus Polypropylen-basierten expandierten Harzkügelchen nach einem der Ansprüche 1 bis 6, bei dem eine Reindichte der Polypropylen-basierten expandierten Harzkügelchen 10 kg/m$^3$ oder mehr und 50 kg/m$^3$ oder weniger ist.

8. Verfahren zum Herstellen eines geformten Artikels aus Polypropylen-basierten expandierten Harzkügelchen nach einem der Ansprüche 1 bis 7, bei dem eine Formvorrichtung, die einen Fülltrichter, der die Polypropylen-basierten expandierten Harzkügelchen aufnimmt, und einen Leitungspfad, der den Fülltrichter und die Form verbindet, aufweist, verwendet wird,
das Verfahren weist auf:

Komprimieren der Polypropylen-basierten expandierten Harzkügelchen, die in dem Fülltrichter aufgenommen sind, durch ein Setzen eines Inneren des Fülltrichters, eines Inneren des Leitungspfads und eines Inneren der Form unter Druck mit dem Druckgas derart, dass ein Druck (A) in dem Fülltrichter 0,15 MPa (G) oder mehr und 0,30 MPa (G) oder weniger wird, ein Druck (B) in der Form 0,12 MPa (G) oder mehr und 0,28 MPa (G) oder weniger wird und eine Differenz [(A) - (B)] zwischen dem Druck (A) in dem Fülltrichter und dem Druck (B) in der Form mehr als 0 MPa und 0,10 MPa oder weniger wird, und
Füllen der Polypropylen-basierten expandierten Harzkügelchen in die Form von dem Fülltrichter in die Form durch den Leitungspfad, während ein komprimierter Zustand der Polypropylen-basierten expandierten Harzkügelchen beibehalten wird.

**Revendications**

1. Procédé de fabrication d'un article moulé de billes expansées en résine à base de polypropylène, le procédé comprenant le remplissage d'un moule avec des billes expansées en résine à base de polypropylène dans un état comprimé par un gaz sous pression, puis l'introduction d'un milieu chauffant dans le moule pour effectuer un moulage dans le moule sur les billes expansées en résine à base de polypropylène dans le moule, dans lequel

les billes expansées en résine à base de polypropylène ont chacune une forme tubulaire avec un trou traversant, un diamètre moyen de trou d des trous traversants des billes expansées en résine à base de polypropylène est compris entre 0,1 mm et 1 mm, le rapport d/D entre le diamètre moyen de trou d des trous traversants et le diamètre extérieur moyen D des billes expansées en résine à base de polypropylène est inférieur ou égal à 0,4, le diamètre moyen de trou d et le diamètre extérieur moyen D étant déterminés comme décrit dans la description, et **caractérisé en ce que**

un rapport de compression P des billes expansées en résine à base de polypropylène dans un état de remplissage dans le moule, qui est représenté par la formule (1) suivante, est supérieur à 25 % et inférieur ou égal à 80 % :

$$P = [\{a/(b \times c)\}-1] \times 100 \ ... \ (1)$$

(dans la formule (1), a représente une masse (unité : kg) des billes expansées en résine à base de polypropylène remplies dans le moule, b représente une masse volumique (unité : kg/m$^3$) des billes expansées en résine à base de polypropylène calculée comme décrit dans la description, et c représente un volume interne (unité : m$^3$) du moule).

2. Procédé de fabrication d'un article moulé de billes expansées en résine à base de polypropylène selon la revendication 1, dans lequel un rapport entre la densité apparente des billes expansées en résine à base de polypropylène, calculée comme décrit dans la description, et la masse volumique des billes expansées en résine à base de polypropylène est supérieur à 1,6 et inférieur ou égal à 2,0.

3. Procédé de fabrication d'un article moulé de billes expansées en résine à base de polypropylène selon la revendication 1 ou 2, dans lequel le trou traversant de la bille expansée en résine à base de polypropylène a une circularité de 0,90 ou plus, calculée comme décrit dans la description.

4. Procédé de fabrication d'un article moulé de billes expansées en résine à base de polypropylène selon l'une quelconque des revendications 1 à 3, dans lequel une résine à base de polypropylène qui est une résine de base des billes expansées en résine à base de polypropylène est un copolymère statistique éthylène-propylène, et la teneur en composant éthylène dans le copolymère statistique éthylène-propylène est de 0,5 % en masse ou plus et de 3,5 % en masse ou moins.

5. Procédé de fabrication d'un article moulé de billes expansées en résine à base de polypropylène selon l'une quelconque des revendications 1 à 4, dans lequel le module de flexion de la résine à base de polypropylène qui est la résine de base des billes expansées en résine à base de polypropylène est de 800 MPa ou plus et de 1600 MPa ou moins, déterminé sur la base de la norme JIS K 7171:2008.

6. Procédé de fabrication d'un article moulé de billes expansées en résine à base de polypropylène selon l'une quelconque des revendications 1 à 5, dans lequel chaque bille expansée en résine à base de polypropylène comprend une couche centrale expansée contenant une résine à base de polypropylène comme résine de base et une couche de recouvrement recouvrant la couche centrale expansée, et la résine de base de la couche de revêtement est une résine à base de polyoléfine ayant un point de fusion inférieur au point de fusion de la résine à base de polypropylène.

7. Procédé de fabrication d'un article moulé de billes expansées en résine à base de polypropylène selon l'une quelconque des revendications 1 à 6, dans lequel la masse volumique des billes expansées en résine à base de polypropylène est comprise entre 10 kg/m$^3$ et 50 kg/m$^3$.

8. Procédé de fabrication d'un article moulé de billes expansées en résine à base de polypropylène selon l'une quelconque des revendications 1 à 7, dans lequel un appareil de moulage comprenant une trémie de remplissage qui reçoit les billes expansées en résine à base de polypropylène et un chemin de transfert qui relie la trémie de remplissage et le moule est utilisé,

le procédé comprend les étapes consistant à :

compresser les billes expansées en résine à base de polypropylène logées dans la trémie de remplissage par pressurisation de l'intérieur de la trémie de remplissage, de l'intérieur du chemin de transfert et l'intérieur du moule avec le gaz de pressurisation de telle sorte que la pression (A) dans la trémie de remplissage devienne comprise entre 0,15 MPa (G) et 0,30 MPa (G), la pression (B) dans le moule devienne comprise entre 0,12 MPa (G) et 0,28 MPa (G), et la différence [(A) - (B)] entre la pression (A) dans la trémie de remplissage et la pression (B) dans le moule est supérieure à 0 MPa et inférieure ou égale à 0,10 MPa, et

remplir le moule avec les billes expansées en résine à base de polypropylène à partir de la trémie de remplissage vers le moule via le chemin de transfert tout en maintenant un état comprimé des billes expansées en résine à base de polypropylène.

FIG. 1

FIG. 2

FIG. 3

**EP 4 406 997 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006307177 A
- JP 46038359 B
- JP 62151325 A
- JP 2003201361 A